# EUROPEAN PATENT APPLICATION

(11) **EP 4 807 846 A1**
(43) Date of publication of application: **16.09.2026**
(21) Application number: 24887645.0
(22) Date of filing: 19.09.2024
(51) Int. Cl.: H01M 10/0567, H01M 10/054

(54) **ELECTROLYTE, SODIUM SECONDARY BATTERY AND ELECTRICAL APPARATUS**

(30) Priority: 09.11.2023 CN 202311485830
(71) Applicant: Contemporary Amperex Technology Co., Limited, Ningde, Fujian 352100 (CN)
(72) Inventor: WU, Kai, Ningde, Fujian 352100 (CN); TIE, Zhiwei, Ningde, Fujian 352100 (CN); ZOU, Hailin, Ningde, Fujian 352100 (CN); CHEN, Peipei, Ningde, Fujian 352100 (CN)
(74) Representative: Ziebig Hengelhaupt Intellectual Property Attorneys Patentanwaltskanzlei PartGmbB
(86) International application number: PCT/CN2024/119836
(87) International publication number: WO 2025/098027

(57) **Abstract**

An electrolyte, a sodium secondary battery and an electrical apparatus. The electrolyte comprises a first additive and a second additive, the first additive comprising difluoro(oxalato)borate, and the second additive comprising one or more of fluorosulfonate and difluorophosphate. The combined use of the first additive and the second additive facilitates improving the stability of an SEI membrane, such that the amount of gas produced by the sodium secondary battery during a cycle process and a storage process is reduced, thereby improving the fast charging performance and storage performance of a sodium secondary battery.

## Description

### CROSS-REFERENCE TO RELATED APPLICATIONS

The present application claims priority to Chinese Patent Application No. 202311485830.3, filed on November 9, 2023 and entitled "ELECTROLYTE, SODIUM SECONDARY BATTERY, AND POWER-CONSUMING APPARATUS", which is incorporated herein by reference in its entirety.

### TECHNICAL FIELD

The present application relates to the field of sodium battery technologies, and in particular, to an electrolyte, a sodium secondary battery, and a power-consuming apparatus.

### BACKGROUND

In recent years, secondary batteries are widely used in energy storage power systems such as hydroelectric power stations, thermal power stations, wind power stations, and solar power stations, as well as in various fields such as electric tools, electric bicycles, electric motorcycles, electric vehicles, military equipment, and aerospace.

Compared with lithium secondary batteries, sodium secondary batteries offer greater competitive advantages due to abundance and wide distribution of sodium resources. However, the sodium secondary batteries suffer from a problem of gas generation that severely affects electrical performance of the batteries, and consequently are unable to meet application requirements of next-generation electrochemical systems.

### SUMMARY

In view of the foregoing problem, an objective of the present application is to provide an electrolyte, so as to improve stability of a solid electrolyte interphase (SEI) film, thereby reducing an amount of gas generated by a sodium secondary battery during cycling and storage, improving storage performance, fast charging performance, and cycling performance of the sodium secondary battery, and comprehensively improving performance of the sodium secondary battery.

A first aspect of the present application provides an electrolyte for a sodium secondary battery, including a first additive and a second additive. The first additive includes difluoro(oxalato)borate. The second additive includes one or more of fluorosulfonate and difluorophosphate. The fluorosulfonate includes a compound shown in formula II:

(FSO₃)_{y2}M2^{y2+} formula II

where M2^{y2+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y2 = 1, 2, or 3.

Prior to a solvent, the first additive including the difluoro(oxalato)borate and/or the second additive including the difluorophosphate can be reduced to form a film on a negative electrode, generating oxalate-based components and other fluorine-, sulfur-, or phosphorus-containing components in an SEI film. This reduces solubility of the SEI film in the electrolyte, thereby greatly reducing gas generation. In addition, the synergistic effect of the first additive and the second additive helps improve stability of the SEI film and maintain flexibility of the SEI film, reducing direct current resistance of the sodium secondary battery, improving storage performance and fast charging performance of the sodium secondary battery, and comprehensively improving cycling performance of the sodium secondary battery.

In any implementation, the difluoro(oxalato)borate includes a compound shown in formula I:

(F₂C₂O₄B)_{y1}M1^{y1+} formula I

where M1^{y1+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y1 = 1, 2, or 3.

The difluoro(oxalato)borate can generate oxalate-based components in the SEI film. The SEI film can coat a surface of a negative electrode plate to reduce exposure of the negative electrode plate to the electrolyte and reduce side reactions and gas generation, improving performance of the sodium secondary battery.

In any implementation, the difluorophosphate includes a compound shown in formula III:

(PO₂F₂)_{y3}M3^{y3+} formula III

where M3^{y3+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y3 = 1, 2, or 3.

The fluorosulfonate or difluorophosphate can form other fluorine-, sulfur-, or phosphorus-containing components in the SEI film, so that stability of the SEI film on the surface of the negative electrode plate can be improved, oxidative decomposition of the entire SEI film can be reduced, and solubility of the SEI film in the solvent of the electrolyte can be reduced, thereby improving storage performance of the sodium secondary battery.

In any implementation, a mass ratio of the first additive to the second additive is 0.001 to 1000.

The mass ratio of the first additive to the second additive is controlled to be within an appropriate range, so that solubility of the SEI film in the electrolyte can be reduced, thereby greatly reducing gas generation. In addition, the synergistic effect of the first additive and the second additive can balance storage performance and direct current resistance of the sodium secondary battery, comprehensively improving performance of the sodium secondary battery.

In any implementation, the mass ratio of the first additive to the second additive is 0.01 to 200.

The mass ratio of the first additive to the second additive is controlled to be 0.01 to 200, helping further improve cycling performance of the sodium secondary battery.

In any implementation, in percentage by mass of the electrolyte, a mass content of the difluoro(oxalato)borate is 0.001% to 5%.

The mass content of the difluoro(oxalato)borate is controlled to be within an appropriate range, helping generate oxalate-based components in the SEI film, and reduce cracking of the entire SEI film caused by expansion of the sodium secondary battery during cycling of the sodium secondary battery, thereby enhancing a protective capability of the entire SEI film, and improving storage performance of the sodium secondary battery.

In any implementation, in percentage by mass of the electrolyte, the mass content of the difluoro(oxalato)borate is 0.1% to 2%.

The mass content of the difluoro(oxalato)borate is controlled to be 0.1% to 2%, helping balance storage performance and fast charging performance of the sodium secondary battery, and comprehensively improving performance of the sodium secondary battery.

In any implementation, in percentage by mass of the electrolyte, a mass content of the fluorosulfonate is 0.001% to 5%.

The mass content of the fluorosulfonate is controlled to be within an appropriate range, helping form fluorine- and sulfur-containing components in the SEI film, to effectively improve stability of the entire interface SEI film and reduce solubility of the interface SEI film in the electrolyte, thereby greatly reducing gas generation, and improving cycling performance and storage performance of the sodium secondary battery.

In any implementation, in percentage by mass of the electrolyte, the mass content of the fluorosulfonate is 0.1% to 2%.

The mass content of the fluorosulfonate is controlled to be 0.1% to 2%, helping balance storage performance and fast charging performance of the sodium secondary battery, and comprehensively improving performance of the sodium secondary battery.

In any implementation, in percentage by mass of the electrolyte, a mass content of the difluorophosphate is 0.001% to 5%.

The mass content of the difluorophosphate is controlled to be within an appropriate range, helping form fluorine- and phosphorus-containing components in the SEI film, to effectively improve stability of the entire interface SEI film and reduce solubility of the interface SEI film in the electrolyte, thereby greatly reducing gas generation, and improving cycling performance and storage performance of the sodium secondary battery.

In any implementation, in percentage by mass of the electrolyte, the mass content of the difluorophosphate is 0.1% to 2%.

The mass content of the difluorophosphate is controlled to be 0.1% to 2%, helping balance storage performance and fast charging performance of the sodium secondary battery, and comprehensively improving performance of the sodium secondary battery.

In any implementation, the electrolyte further includes a third additive, and the third additive includes one or more of fluoroethylene carbonate, difluoroethylene carbonate, vinylene carbonate, vinyl ethylene carbonate, maleic anhydride, succinic anhydride, and triallyl phosphate.

The introduction of the third additive containing unsaturated functional groups helps form an SEI film with higher solubility on the surface of the negative electrode plate prior to the solvent in the electrolyte. This reduces solubility of the entire SEI film in the electrolyte and reduces exposure of the negative electrode plate to the electrolyte, thereby reducing gas generation, and comprehensively improving performance of the battery.

In any implementation, in percentage by mass of the electrolyte, a mass content of the third additive is 0.01% to 10%.

The mass content of the third additive is controlled to be within an appropriate range. This can provide a sufficient amount of the third additive to form an SEI film with higher solubility, reduce solubility of the entire SEI film in the electrolyte, and reduce exposure of the negative electrode plate to the electrolyte, thereby reducing gas generation, and comprehensively improving performance of the battery.

In any implementation, in percentage by mass of the electrolyte, the mass content of the third additive is 0.1% to 5%.

The mass content of the third additive is controlled to be 0.1% to 5%, helping balance storage performance and fast charging performance of the sodium secondary battery, and comprehensively improving performance of the sodium secondary battery.

In any implementation, the electrolyte includes a sodium salt, and the sodium salt includes one or more of NaPF₆, NaFSI, NaBF₄, NaN(SO₂F)₂, NaClO₄, NaAsF₆, NaB(C₂O₄)₂, and NaBF₂(C₂O₄).

In any implementation, the electrolyte includes a solvent, and the solvent includes one or more of a linear carbonate solvent, a linear carboxylate solvent, a cyclic carbonate solvent, and an ether solvent.

In any implementation, the linear carbonate solvent includes one or more of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the linear carboxylate solvent includes one or more of methyl formate, ethyl formate, methyl propionate, ethyl propionate, propyl propionate, ethyl butyrate, methyl acetate, ethyl acetate, and propyl acetate;
the cyclic carbonate includes one or more of ethylene carbonate, propylene carbonate, butylene carbonate, vinylene carbonate, fluoroethylene carbonate, ethylene sulfite, propylene sulfite, vinyl ethylene carbonate, 4-ethynyl-1,3-dioxolan-2-one, cis-4,5-difluoro-1,3-dioxolan-2-one, and trans-4,5-difluoro-1,3-dioxolan-2-one; and
the ether solvent includes one or more of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

A second aspect of the present application provides a sodium secondary battery, including a positive electrode plate, a negative electrode plate, and the electrolyte according to the first aspect of the present application.

In any implementation, the positive electrode plate includes a positive electrode current collector and a positive electrode material layer on at least one side of the positive electrode current collector, the positive electrode material layer includes a positive electrode active material, and the positive electrode active material includes at least one of a layered transition metal oxide, a Prussian blue compound, and a polyanionic compound.

In any implementation, a general formula of the layered transition metal oxide is NaₓMnₐFe_{b}Ni_{c}M_{d}NₑO_{2-δ}Q_{f}, where M includes at least one of Ti, Li, V, Cr, Cu, Zn, Zr, Nb, Mo, Sn, Hf, Ta, Mg, and Al, N includes at least one of Si, P, B, S, and Se, Q includes at least one of F, Cl, and N, 0.66 ≤ x ≤ 1, 0 < a ≤ 0.7, 0 < b ≤ 0.7, 0 < c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

In any implementation, the positive electrode active material includes a layered transition metal oxide containing a Cu element; and
a ratio of the mass content of the difluoro(oxalato)borate in the electrolyte to a mass content of the Cu element in the positive electrode active material is greater than or equal to 0.002.

The introduction of the Cu element into the positive electrode active material is conducive to stability of a structure of the positive electrode active material. In addition, the Cu element in the positive electrode active material and a decomposition product of the difluoro(oxalato)borate can be oxidized on an interface of the positive electrode plate to form an insoluble Cu salt, helping mitigate aggravated gas generation caused by oxidative decomposition of the electrolyte on the positive electrode plate side. The ratio of the mass content of the difluoro(oxalato)borate in the electrolyte to the mass content of the Cu element in the positive electrode active material is controlled to be within an appropriate range. This can effectively mitigate aggravated gas generation caused by oxidative decomposition of the electrolyte on the positive electrode plate side.

In any implementation, the mass content of the Cu element in the positive electrode active material is less than or equal to 23%.

The mass content of the Cu element in the positive electrode active material is controlled to be within an appropriate range. This helps provide a sufficient amount of the Cu element to improve stability of the structure of the positive electrode active material, and mitigate performance degradation of the sodium secondary battery caused by oxidative decomposition of the electrolyte due to an excessively high mass content of the Cu element in the positive electrode active material.

In any implementation, the mass content of the Cu element in the positive electrode active material is 6.5% to 18%.

The mass content of the Cu element in the positive electrode active material is controlled to be 6.5% to 18%, helping further balance storage performance and fast charging performance of the sodium secondary battery.

In any implementation, the negative electrode plate includes a negative electrode current collector and a negative electrode material layer on at least one side of the negative electrode current collector, and the negative electrode material layer includes a Ca element;
and
a ratio of the mass content of the difluoro(oxalato)borate in the electrolyte to a mass content of the Ca element in the negative electrode material layer is greater than or equal to 1.

The introduction of the Ca element into the negative electrode active material helps reduce formation of sodium dendrites. In addition, the introduction of the Ca element into the negative electrode active material also helps form, with a reduction product of the difluoro(oxalato)borate, an SEI film containing a calcium salt, thereby enhancing toughness of the SEI film, and reducing direct current resistance of the sodium secondary battery. The ratio of the mass content of the difluoro(oxalato)borate in the electrolyte to the mass content of the Ca element in the negative electrode material layer is controlled to be within an appropriate range. This can balance storage performance and fast charging performance of the sodium secondary battery.

In any implementation, the mass content of the Ca element in the negative electrode material layer is 0.1 ppm to 3000 ppm.

The mass content of the Ca element in the negative electrode material layer is controlled to be within an appropriate range. This can form an SEI film containing a calcium salt, enhancing toughness of the SEI film, and reducing direct current resistance of the sodium secondary battery, and can mitigate performance degradation of the sodium secondary battery caused by the increase of direct current resistance of the sodium secondary battery, balancing storage performance and fast charging performance of the sodium secondary battery.

In any implementation, the mass content of the Ca element in the negative electrode material layer is 2 ppm to 1000 ppm.

In any implementation, the mass content of the Ca element in the negative electrode material layer is 100 ppm to 1000 ppm.

The mass content of the Ca element in the negative electrode material layer is controlled to be 2 ppm to 1000 ppm or 100 ppm to 1000 ppm, helping further comprehensively improve storage performance and fast charging performance of the sodium secondary battery.

In any implementation, the negative electrode material layer further includes a negative electrode active material, and the negative electrode active material includes one or more of hard carbon, metal sodium, a tin alloy, and a metal oxide.

In any implementation, at a charging rate of 0.05 C, a capacity of the negative electrode plate within a charging range of 0.5 V to 1 V is 9 mAh/g to 140 mAh/g.

Within the charging range of 0.5 V to 1 V, the capacity of the negative electrode plate is controlled to be within an appropriate range. This can provide sufficient capacity of the negative electrode plate to meet a requirement for energy density of the sodium secondary battery, and can also mitigate performance degradation of the sodium secondary battery caused by an increased amount of generated gas due to an excessively high capacity of the negative electrode plate.

In any implementation, at the charging rate of 0.05 C, the capacity of the negative electrode plate within the charging range of 0.5 V to 1 V is 18 mAh/g to 70 mAh/g.

Within the charging range of 0.5 V to 1 V, in some implementations, the capacity of the negative electrode plate is controlled to be 18 mAh/g to 70 mAh/g, helping further balance energy density and storage performance of the sodium secondary battery.

A third aspect of the present application provides a power-consuming apparatus, including the sodium secondary battery according to the second aspect of the present application.

### BRIEF DESCRIPTION OF THE DRAWINGS

To describe the technical solutions in embodiments of the present application more clearly, the following briefly describes the accompanying drawings required for the embodiments of the present application. Apparently, the accompanying drawings described below show only some embodiments of the present application, and a person of ordinary skill in the art can still derive other drawings from the accompanying drawings without creative efforts.
FIG. 1 is a schematic diagram of a sodium secondary battery according to an implementation of the present application;
FIG. 2 is an exploded view of the sodium secondary battery according to the implementation of the present application shown in FIG. 1;
FIG. 3 is a schematic diagram of a battery module according to an implementation of the present application;
FIG. 4 is a schematic diagram of a battery pack according to an implementation of the present application;
FIG. 5 is an exploded view of the battery pack according to the implementation of the present application shown in FIG. 4; and
FIG. 6 is a schematic diagram of a power-consuming apparatus powered by a sodium secondary battery according to an implementation of the present application.

### Reference numerals:

1: battery pack; 2: upper box; 3: lower box; 4: battery module; 5: sodium secondary battery; 51: housing; 52: electrode assembly; 53: cover plate.

### DETAILED DESCRIPTION

The following specifically discloses in detail implementations of an electrolyte, a sodium secondary battery, and a power-consuming apparatus of the present application with reference to the accompanying drawings as appropriate. However, there are cases in which unnecessary detailed descriptions are omitted. For example, there are cases in which detailed descriptions of well-known matters are omitted and repeated descriptions of an actual same structure are omitted. This is to avoid making the following descriptions unnecessarily lengthy, and to facilitate understanding by a person skilled in the art. In addition, the accompanying drawings and the following descriptions are provided for a person skilled in the art to fully understand the present application and are not intended to limit the subject matter recorded in the claims.

The "range" disclosed in the present application is defined in the form of a lower limit and an upper limit. A given range is defined by selecting a lower limit and an upper limit, and the selected lower limit and upper limit define boundaries of the particular range. The range defined in this manner may include or may not include end values, and the end values may be arbitrarily combined, that is, any lower limit may be combined with any upper limit to form a range. For example, if a range 60 to 120 and a range 80 to 110 are listed for a specific parameter, it is to be understood that the range 60 to 110 and the range 80 to 120 are also contemplated. In addition, if minimum range values 1 and 2 are listed, and if maximum range values 3, 4, and 5 are listed, the following ranges are all contemplated: 1 to 3, 1 to 4, 1 to 5, 2 to 3, 2 to 4, and 2 to 5. In the present application, unless otherwise specified, a numerical range "a to b" represents an abbreviated representation of any combination of real numbers between a and b, where both a and b are real numbers. For example, a numerical range "0 to 5" indicates that all real numbers between "0 and 5" have been fully listed herein, and "0 to 5" is merely an abbreviated representation of a combination of these numbers. In addition, when a parameter is expressed as an integer ≥ 2, the parameter is disclosed to be, for example, an integer 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, preferably performed sequentially. For example, the method includes step (a) and step (b), indicating that the method may include step (a) and step (b) that are performed sequentially, or may include step (b) and step (a) that are performed sequentially.

For example, the method mentioned may further include step (c), indicating that step (c) may be added to the method in any order. For example, the method may include step (a), step (b), and step (c), or may include step (a), step (c), and step (b), or may include step (c), step (a), and step (b).

Unless otherwise specified, "comprise" and "include" mentioned in the present application indicate open inclusion or closed inclusion. For example, the "comprise" and "include" may indicate that other components not listed may be further comprised or included, or only listed components may be comprised or included.

Unless otherwise specified, the term "or" is inclusive in the present application. For example, a phrase "A or B" indicates "A, B, or both A and B". More specifically, the condition "A or B" is satisfied by any one of the following: A is true (or present) and B is false (or absent); A is false (or absent) and B is true (or present); or both A and B are true (or present).

The problem of gas generation in sodium secondary batteries severely affects electrical performance of the sodium secondary batteries, especially the problem of gas generation on a negative electrode plate side in the sodium secondary battery at low voltages. Typically, a film-forming additive is introduced into an electrolyte to form a solid electrolyte interphase (SEI) film on a surface of the negative electrode plate. The formation of the SEI film can prevent, to some extent, further decomposition of the electrolyte and gas generation, thereby improving performance of the sodium secondary battery. However, the sodium secondary battery still suffers from the problem of gas generation during cycling and storage. Therefore, it is necessary to design an electrolyte to meet application requirements of next-generation electrochemical systems.

### [Electrolyte]

Based on this, the present application provides an electrolyte for a sodium secondary battery. The electrolyte includes a first additive and a second additive. The first additive includes difluoro(oxalato)borate. The second additive includes one or more of fluorosulfonate and difluorophosphate. The fluorosulfonate includes a compound shown in formula II:

(FSO₃)_{y2}M2^{y2+} formula II

where M2^{y2+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y2 = 1, 2, or 3.

In this specification, "difluoro(oxalato)borate" is a compound with the anion 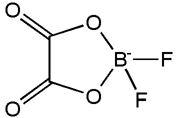 and the cation including but not limited to one or more of Li⁺, Na⁺, K⁺, Rb⁺, Cs⁺, Mg²⁺, Ca²⁺, Ba²⁺, Fe²⁺, Ni²⁺, A1³⁺, Fe³⁺, and Ni³⁺.

In this specification, "fluorosulfonate" is a compound with the anion 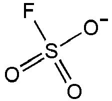 and the cation including but not limited to one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺.

In this specification, "difluorophosphate" is a compound with the anion 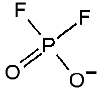 and the cation including but not limited to one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺.

In some implementations, the second additive includes fluorosulfonate.

In some implementations, the second additive includes difluorophosphate.

In some implementations, the second additive includes fluorosulfonate and difluorophosphate.

In some implementations, M2^{y2+} includes one or more of Li⁺ and Na⁺, and y2 = 1.

In some implementations, the fluorosulfonate includes one or more of sodium fluorosulfonate, lithium fluorosulfonate, potassium fluorosulfonate, magnesium fluorosulfonate, and iron fluorosulfonate. In some implementations, the fluorosulfonate includes sodium fluorosulfonate. In some implementations, the fluorosulfonate includes lithium fluorosulfonate.

Research has found that there are two reasons why the sodium secondary battery still suffers from severe gas generation at low voltages during cycling and storage: First, a negative electrode potential of the sodium secondary battery is higher than a negative electrode potential of a lithium secondary battery by 0.3 V. A higher potential more strongly drives the film-forming additive to form an SEI film primarily including organic components. However, the organic components are unstable and begin to oxidize and decompose at 0.5 V, generating a large amount of gas. Second, solubility of an SEI film in an electrolyte in the sodium secondary battery is higher than solubility of an SEI film in an electrolyte in the lithium secondary battery. The dissolution of the SEI film exposes a negative electrode plate to the electrolyte, leading to side reactions between the negative electrode plate and the electrolyte and generating a large amount of gas. In addition, a transition metal in a positive electrode active material including a layered metal oxide catalyzes a solvent in the electrolyte to oxidize, forming RH⁺. Because RH⁺ is not resistant to reduction, the exposure of the negative electrode plate also causes RH⁺ that migrates to the surface of the negative electrode plate to be reduced, forming a component that is not resistant to oxidation, and generating a large amount of gas.

Prior to a solvent, the first additive including the difluoro(oxalato)borate and/or the second additive including the fluorosulfonate and/or the difluorophosphate can be reduced to form a film on a negative electrode, generating oxalate-based components and other fluorine-, sulfur-, or phosphorus-containing components in an SEI film. This reduces solubility of the SEI film in the electrolyte, thereby greatly reducing gas generation. In addition, the synergistic effect of the first additive and the second additive helps improve stability of the SEI film and maintain flexibility of the SEI film, reducing direct current resistance of the sodium secondary battery, improving storage performance and fast charging performance of the sodium secondary battery, and comprehensively improving cycling performance of the sodium secondary battery.

In some implementations, the difluoro(oxalato)borate includes a compound shown in formula I:

(F₂C₂O₄B)_{y1}M1^{y1+} formula I

where M1^{y1+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y1 = 1, 2, or 3.

In some implementations, M1^{y1+} includes one or more of Li⁺ and Na⁺, and y1 = 1.

In some implementations, the difluoro(oxalato)borate includes one or more of sodium difluoro(oxalato)borate, lithium difluoro(oxalato)borate, potassium difluoro(oxalato)borate, magnesium difluoro(oxalato)borate, and iron difluoro(oxalato)borate. In some implementations, the difluoro(oxalato)borate includes sodium difluoro(oxalato)borate. In some implementations, the difluoro(oxalato)borate includes lithium difluoro(oxalato)borate.

The difluoro(oxalato)borate can generate oxalate-based components in the SEI film. The SEI film can coat a surface of a negative electrode plate to reduce exposure of the negative electrode plate to the electrolyte and reduce side reactions and gas generation, improving performance of the sodium secondary battery.

In some implementations, the difluorophosphate includes a compound shown in formula III:

(PO₂F₂)_{y3}M3^{y3+} formula III

where M3^{y3+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y3 = 1, 2, or 3.

In some implementations, M3^{y3+} includes one or more of Li⁺ and Na⁺, and y3 = 1.

In some implementations, the difluorophosphate includes one or more of sodium difluorophosphate, lithium difluorophosphate, potassium difluorophosphate, magnesium difluorophosphate, and iron difluorophosphate. In some implementations, the difluorophosphate includes sodium difluorophosphate. In some implementations, the difluorophosphate includes lithium difluorophosphate.

The fluorosulfonate or difluorophosphate can form other fluorine-, sulfur-, or phosphorus-containing components in the SEI film, so that stability of the SEI film on the surface of the negative electrode plate can be improved, oxidative decomposition of the entire SEI film can be reduced, and solubility of the SEI film in the solvent of the electrolyte can be reduced, thereby reducing an amount of gas generated by the sodium secondary battery, and improving storage performance of the sodium secondary battery.

In some implementations, a mass ratio of the first additive to the second additive is 0.001 to 1000. In some implementations, the mass ratio of the first additive to the second additive is optionally 0.001, 0.005, 0.01, 0.05, 0.1, 0.5, 1, 5, 10, 50, 100, 200, 300, 400, 500, 600, 700, 800, 900, 1000, or a value within a range defined by any two of the foregoing values.

The mass ratio of the first additive to the second additive is controlled to be within an appropriate range, so that solubility of the SEI film in the electrolyte can be reduced, thereby greatly reducing gas generation. In addition, the synergistic effect of the first additive and the second additive can balance storage performance and direct current resistance of the sodium secondary battery, comprehensively improving performance of the sodium secondary battery.

In some implementations, the mass ratio of the first additive to the second additive is 0.01 to 200.

The mass ratio of the first additive to the second additive is further controlled to be 0.01 to 200, helping further improve cycling performance of the sodium secondary battery.

In some implementations, in percentage by mass of the electrolyte, a mass content of the difluoro(oxalato)borate is 0.001% to 5%. In some implementations, in percentage by mass of the electrolyte, the mass content of the difluoro(oxalato)borate is optionally 0.001%, 0.005%, 0.01%, 0.05%, 0.1%, 0.5%, 1%, 2%, 3%, 4%, 5%, or a value within a range defined by any two of the foregoing values.

The mass content of the difluoro(oxalato)borate is controlled to be within an appropriate range, helping generate oxalate-based components in the SEI film, and reduce cracking of the entire SEI film caused by expansion of the sodium secondary battery during cycling of the sodium secondary battery, thereby enhancing a protective capability of the entire SEI film, and improving storage performance of the sodium secondary battery.

In some implementations, in percentage by mass of the electrolyte, the mass content of the difluoro(oxalato)borate is 0.1% to 2%.

The mass content of the difluoro(oxalato)borate is further controlled to be 0.1% to 2%, helping balance storage performance and fast charging performance of the sodium secondary battery, and comprehensively improving performance of the sodium secondary battery.

In some implementations, in percentage by mass of the electrolyte, a mass content of the fluorosulfonate is 0.001% to 5%. In some implementations, in percentage by mass of the electrolyte, the mass content of the fluorosulfonate is optionally 0.001%, 0.005%, 0.01%, 0.05%, 0.1%, 0.5%, 1%, 2%, 3%, 4%, 5%, or a value within a range defined by any two of the foregoing values.

The mass content of the fluorosulfonate is controlled to be within an appropriate range, helping form fluorine- and sulfur-containing components in the SEI film, to effectively improve stability of the entire interface SEI film and reduce solubility of the interface SEI film in the electrolyte, thereby greatly reducing gas generation, and improving cycling performance and storage performance of the sodium secondary battery.

In some implementations, in percentage by mass of the electrolyte, the mass content of the fluorosulfonate is 0.1% to 2%. In some implementations, in percentage by mass of the electrolyte, the mass content of the fluorosulfonate is optionally 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, or a value within a range defined by any two of the foregoing values.

The mass content of the fluorosulfonate is further controlled to be 0.1% to 2%, helping balance storage performance and fast charging performance of the sodium secondary battery, and comprehensively improving performance of the sodium secondary battery.

In some implementations, in percentage by mass of the electrolyte, a mass content of the difluorophosphate is 0.001% to 5%. In some implementations, in percentage by mass of the electrolyte, the mass content of the difluorophosphate is optionally 0.001%, 0.005%, 0.01%, 0.05%, 0.1%, 0.5%, 1%, 2%, 3%, 4%, 5%, or a value within a range defined by any two of the foregoing values.

The mass content of the difluorophosphate is controlled to be within an appropriate range, helping form fluorine- and phosphorus-containing components in the SEI film, to effectively improve stability of the entire interface SEI film and reduce solubility of the interface SEI film in the electrolyte, thereby greatly reducing gas generation, and improving cycling performance and storage performance of the sodium secondary battery.

In some implementations, in percentage by mass of the electrolyte, the mass content of the difluorophosphate is 0.1% to 2%.

The mass content of the difluorophosphate is further controlled to be 0.1% to 2%, helping balance storage performance and fast charging performance of the sodium secondary battery, and comprehensively improving performance of the sodium secondary battery.

In some implementations, the electrolyte further includes a third additive, and the third additive includes one or more of fluoroethylene carbonate (FEC), difluoroethylene carbonate (DFEC), vinylene carbonate (VC), vinyl ethylene carbonate (VEC), maleic anhydride, succinic anhydride, and triallyl phosphate.

In some implementations, the third additive includes fluoroethylene carbonate. In some implementations, the third additive includes vinylene carbonate. In some implementations, the third additive includes maleic anhydride. In some implementations, the third additive includes succinic anhydride. In some implementations, the third additive includes triallyl phosphate.

The introduction of the third additive containing unsaturated functional groups helps the third solvent form an SEI film with lower solubility on the surface of the negative electrode plate prior to the solvent in the electrolyte. This reduces solubility of the entire SEI film in the electrolyte and reduces exposure of the negative electrode plate to the electrolyte, thereby reducing gas generation, and comprehensively improving performance of the battery.

In some implementations, in percentage by mass of the electrolyte, a mass content of the third additive is 0.01% to 10%. In some implementations, in percentage by mass of the electrolyte, the mass content of the third additive is optionally 0.01%, 0.05%, 0.1%, 0.5%, 1%, 2%, 4%, 5%, 6%, 8%, 10%, or a value within a range defined by any two of the foregoing values.

The mass content of the third additive is controlled to be within an appropriate range. This can provide a sufficient amount of the third additive to form an SEI film with higher solubility, reduce solubility of the entire SEI film in the electrolyte, and reduce exposure of the negative electrode plate to the electrolyte, thereby reducing gas generation, and comprehensively improving performance of the battery.

In some implementations, in percentage by mass of the electrolyte, the mass content of the third additive is 0.1% to 5%.

The mass content of the third additive is controlled to be 0.1% to 5%, helping balance storage performance and fast charging performance of the sodium secondary battery, and comprehensively improving performance of the sodium secondary battery.

In some implementations, the electrolyte includes a sodium salt, and the sodium salt includes one or more of NaPF₆, NaFSI, NaBF₄, NaN(SO₂F)₂, NaClO₄, NaAsF₆, NaB(C₂O₄)₂, and NaBF₂(C₂O₄).

In some implementations, the sodium salt includes NaPF₆. In some implementations, the sodium salt includes NaBF₄. In some implementations, the sodium salt includes NaFSI. In some implementations, the sodium salt includes NaPF₆ and NaFSI. In some implementations, the sodium salt includes NaPF₆ and NaClO₄.

In some implementations, the electrolyte includes a solvent, and the solvent includes one or more of a linear carbonate solvent, a linear carboxylate solvent, a cyclic carbonate solvent, and an ether solvent.

In some implementations, the linear carbonate solvent includes one or more of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the linear carboxylate solvent includes one or more of methyl formate, ethyl formate, methyl propionate, ethyl propionate, propyl propionate, ethyl butyrate, methyl acetate, ethyl acetate, and propyl acetate;
the cyclic carbonate includes one or more of ethylene carbonate, propylene carbonate, butylene carbonate, vinylene carbonate, fluoroethylene carbonate, ethylene sulfite, propylene sulfite, vinyl ethylene carbonate, 4-ethynyl-1,3-dioxolan-2-one, cis-4,5-difluoro-1,3-dioxolan-2-one, and trans-4,5-difluoro-1,3-dioxolan-2-one; and
the ether solvent includes one or more of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

### [Positive electrode plate]

The positive electrode plate includes a positive electrode current collector and a positive electrode material layer on at least one side of the positive electrode current collector.

As an example, the positive electrode current collector has two opposite surfaces in a thickness direction thereof, and the positive electrode material layer is provided on either or both of the two opposite surfaces of the positive electrode current collector.

In some implementations, the positive electrode current collector may be metal foil or a composite current collector. For example, in the case of the metal foil, aluminum foil may be used. The composite current collector may include a polymer material substrate layer and a metal layer formed on at least one surface of the polymer material substrate layer. The composite current collector may be formed by forming a metal material (aluminum, an aluminum alloy, nickel, a nickel alloy, titanium, a titanium alloy, silver, a silver alloy, and the like) on a polymer material substrate (such as polypropylene (PP), polyethylene terephthalate (PET), polybutylene terephthalate (PBT), polystyrene (PS), and polyethylene (PE)).

In some implementations, the positive electrode material layer includes a positive electrode active material, and the positive electrode active material may be a positive electrode active material known in the art for a battery. As an example, the positive electrode active material may include at least one of the following materials: a layered transition metal oxide, a polyanionic compound, or a Prussian blue compound. However, the present application is not limited to such materials, and another conventional material that can be used as the positive electrode active material for the battery may alternatively be used. These positive electrode active materials may be used alone or in combination of two or more thereof. The Prussian blue compound includes NaₓP[R(CN)₆]_{δ}·zH2O, where P and R are each independently selected from at least one of transition metal elements, 0 < x ≤ 2, 0 < δ ≤ 1, and 0 ≤ z ≤ 10. The polyanionic compound includes Na_{b}Me_{c}(PO₄)_{d}O₂X, where A includes one or more of H, Li, Na, K, and NH₄, Me includes one or more of Ti, Cr, Mn, Fe, Co, Ni, V, Cu, and Zn, X includes one or more of F, Cl, and Br, 0 < b ≤ 4, 0 < c ≤ 2, and 1 ≤ d ≤ 3. The layered transition metal oxide includes NaₐM_{b}Fe_{c}O₂, where M includes a transition metal ion, 0.67 < a < 1.1, 0.5 < b < 1, and 0 < c < 0.5.

In some implementations, the positive electrode active material includes a layered transition metal oxide.

The positive electrode active material including the layered transition metal oxide offers the advantage of high voltages, but the transition metal thereof catalyzes the solvent in the electrolyte to oxidize, forming RH⁺. Because RH⁺ is not resistant to reduction, the exposure of the negative electrode plate also causes RH⁺ that migrates to the surface of the negative electrode plate to be reduced, forming a component that is not resistant to oxidation, and aggravating gas generation on the negative electrode plate side. The combined use of the first additive and the second additive allows for synergistic interplay between various components in the formed SEI film, helping improve stability of the interface SEI film and reduce solubility of the interface SEI film in the electrolyte, thereby greatly reducing gas generation, and comprehensively improving cycling performance and storage performance of the sodium secondary battery.

In some implementations, a general formula of the layered transition metal oxide is NaₓMnₐFe_{b}Ni_{c}M_{d}NₑO_{2-δ}Q_{f}, where M includes at least one of Ti, Li, V, Cr, Cu, Zn, Zr, Nb, Mo, Sn, Hf, Ta, Mg, and Al, N includes at least one of Si, P, B, S, and Se, Q includes at least one of F, Cl, and N, 0.66 ≤ x ≤ 1, 0 < a ≤ 0.7, 0 < b ≤ 0.7, 0 < c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

In some implementations, the positive electrode active material includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and NaNi_{0.7}Co_{0.15}Mn_{0.15}O₂.

In some implementations, the positive electrode active material includes a layered transition metal oxide containing a Cu element; and a ratio of the mass content of the difluoro(oxalato)borate in the electrolyte to a mass content of the Cu element in the positive electrode active material is greater than or equal to 0.002. In some implementations, the ratio of the mass content of difluoro(oxalato)borate in the electrolyte to the mass content of the Cu element in the positive electrode active material is optionally 0.002, 0.004, 0.005, 0.01, 0.05, 0.1, 0.5, 1, 2, 3, 4, 5, 10, 50, 100, 500, 1000, 2000, 5000, or a value within a range defined by any two of the foregoing values.

It may be understood that the introduction of the Cu element into the positive electrode active material is conducive to stability of the structure of the positive electrode active material, improving cycling performance of the sodium secondary battery. However, a valence state of the Cu element in the positive electrode active material changes at high voltages, generating Cu³⁺. Cu³⁺ possesses high oxidative activity that can accelerate decomposition of the electrolyte, consequently degrading performance of the sodium secondary battery. However, a decomposition product of the difluoro(oxalato)borate in the electrolyte and the Cu element in the positive electrode active material can be oxidized on the interface of the positive electrode plate, forming an insoluble Cu salt, helping mitigate aggravated gas generation caused by decomposition of the electrolyte on the positive electrode plate side. The ratio of the mass content of the difluoro(oxalato)borate in the electrolyte to the mass content of the Cu element in the positive electrode active material is controlled to be within an appropriate range. This can effectively mitigate aggravated gas generation caused by decomposition of the electrolyte on the positive electrode plate side.

In some implementations, the mass content of the Cu element in the positive electrode active material is less than or equal to 23%. In some implementations, the mass content of the Cu element in the positive electrode active material is optionally 1%, 2%, 5%, 7%, 10%, 12%, 15%, 18%, 20%, 23%, or a value within a range defined by any two of the foregoing values.

The mass content of the Cu element in the positive electrode active material is controlled to be within an appropriate range. This helps provide a sufficient amount of the Cu element to improve stability of the structure of the positive electrode active material, and mitigate performance degradation of the sodium secondary battery caused by oxidative decomposition of the electrolyte due to an excessively high mass content of the Cu element in the positive electrode active material.

In some implementations, the mass content of the Cu element in the positive electrode active material is 6.5% to 18%.

The mass content of the Cu element in the positive electrode active material layer is further controlled to be 6.5% to 18%, helping further balance storage performance and fast charging performance of the sodium secondary battery.

In some implementations, the positive electrode active material may not include a Cu element.

In some implementations, the positive electrode material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate-containing resin.

In some implementations, the positive electrode material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared in the following manner: dispersing the foregoing components for preparing the positive electrode plate, such as the positive electrode active material, the conductive agent, the binder, and any other components, in a solvent (for example, N-methylpyrrolidone) to form a positive electrode slurry; and coating the positive electrode slurry onto the positive electrode current collector, followed by drying, cold pressing, and other procedures, to obtain the positive electrode plate.

### [Negative electrode plate]

The negative electrode plate includes a negative electrode current collector and a negative electrode material layer on at least one side of the negative electrode current collector.

As an example, the negative electrode current collector has two opposite surfaces in a thickness direction thereof, and the negative electrode material layer is provided on either or both of the two opposite surfaces of the negative electrode current collector.

In some implementations, the negative electrode current collector may be metal foil or a composite current collector. For example, in the case of the metal foil, copper foil or aluminum foil may be used. The composite current collector may include a polymer material substrate and a metal layer formed on at least one surface of the polymer material substrate. The composite current collector may be formed by forming a metal material (copper, a copper alloy, nickel, a nickel alloy, titanium, a titanium alloy, silver, a silver alloy, and the like) on a polymer material substrate (such as polypropylene (PP), polyethylene terephthalate (PET), polybutylene terephthalate (PBT), polystyrene (PS), and polyethylene (PE)).

The negative electrode material layer further includes a negative electrode active material, and the negative electrode active material includes one or more of hard carbon, metal sodium, a sodium-tin alloy, and a metal oxide.

The foregoing negative electrode active materials all have an excellent sodium storage capability that can make the sodium secondary battery possess high energy density.

In some implementations, the negative electrode material layer further includes a Ca element; and a ratio of the mass content of the difluoro(oxalato)borate in the electrolyte to a mass content of the Ca element in the negative electrode material layer is greater than or equal to 1. In some implementations, the ratio of the mass content of the difluoro(oxalato)borate in the electrolyte to the mass content of the Ca element in the negative electrode material layer is optionally 1, 2, 3, 4, 5, 6, 7, 8, 9, 10, 100, 200, 300, 400, 500, 600, 700, 800, 900, 1000, or a value within a range defined by any two of the foregoing values.

The introduction of the Ca element into the negative electrode active material helps reduce formation of sodium dendrites. In addition, the introduction of the Ca element into the negative electrode active material also helps form, with a reduction product of the difluoro(oxalato)borate, an SEI film containing a Ca salt, thereby enhancing toughness of the SEI film, and reducing direct current resistance of the sodium secondary battery. The ratio of the mass content of the difluoro(oxalato)borate in the electrolyte to the mass content of the Ca element in the negative electrode material layer is controlled to be within an appropriate range. This can balance storage performance and fast charging performance of the sodium secondary battery.

In some implementations, the mass content of the Ca element in the negative electrode material layer is 0.1 ppm to 3000 ppm. In some implementations, the mass content of the Ca element in the negative electrode material layer is optionally 0.1 ppm, 0.5 ppm, 1 ppm, 5 ppm, 10 ppm, 50 ppm, 100 ppm, 200 ppm, 400 ppm, 500 ppm, 600 ppm, 800 ppm, 1000 ppm, 1500 ppm, 2000 ppm, 2500 ppm, 3000 ppm, or a value within a range defined by any two of the foregoing values.

In some implementations, the mass content of the difluoro(oxalato)borate in the electrolyte is 0.001% to 5%, and the mass content of the Ca element in the negative electrode material layer is 0.1 ppm to 3000 ppm. As an example, the ratio of the mass content of the difluoro(oxalato)borate in the electrolyte to the mass content of the Ca element in the negative electrode material layer may be 0.1%/10 ppm = 100, 1% = 10000 ppm.

It may be understood that the Ca element in the negative electrode material layer may participate in the formation of the SEI film, and then some Ca elements are consumed, resulting in the decrease of the mass content of the Ca element in the negative electrode material layer. For example, the mass content of the Ca element in the negative electrode material layer may be reduced to 1 ppm. Therefore, based on the total mass of the negative electrode material layer, the mass content of the Ca element is 0.1 ppm to 3000 ppm, which fall within the protection scope of the implementations of the present application.

The mass content of the Ca element in the negative electrode material layer is controlled to be within an appropriate range. This can form an SEI film containing a calcium salt, enhancing toughness of the entire SEI film, and reducing direct current resistance of the sodium secondary battery, and can mitigate performance degradation of the sodium secondary battery caused by the increase of direct current resistance of the sodium secondary battery, balancing storage performance and fast charging performance of the sodium secondary battery.

In some implementations, the mass content of the Ca element in the negative electrode material layer is 2 ppm to 1000 ppm.

In some implementations, the mass content of the Ca element in the negative electrode material layer is 100 ppm to 1000 ppm.

The mass content of the Ca element in the negative electrode material layer is further controlled to be 2 ppm to 1000 ppm or 100 ppm to 1000 ppm, helping further comprehensively improve storage performance and fast charging performance of the sodium secondary battery.

In some implementations, at a charging rate of 0.05 C, a capacity of the negative electrode plate within a charging range of 0.5 V to 1 V is 9 mAh/g to 140 mAh/g.

Within the charging range of 0.5 V to 1 V, the capacity of the negative electrode plate is controlled to be within an appropriate range. This can provide sufficient capacity of the negative electrode plate to meet a requirement for energy density of the sodium secondary battery, and can also mitigate performance degradation of the sodium secondary battery caused by an increased amount of generated gas due to an excessively high capacity of the negative electrode plate.

In this specification, within the charging range of 0.5 V to 1 V, a method for measuring the capacity of the negative electrode plate may be any known measurement method. As an example, the negative electrode plate is die-cut into a small disk with a diameter of 14 mm, and is then assembled with a metal sodium sheet as a negative electrode, a polypropylene film as a separator, and an electrolyte in Comparative Example 1 as a test electrolyte into a button cell. The button cell is subjected to a constant-current charge/discharge test within a voltage range of 0.005 V to 2 V. In a discharging process, the button cell is discharged at a constant current sequentially at rates of 0.05 C, 40 µA, and 10 µA to 0.005 V. In a charging process, the button cell is charged at a constant current at a rate of 0.05 C to 2 V. In the charging process, a specific capacity (mAh/g) at 0.5 V to 1 V is recorded as a capacity of the negative electrode at 0.5 V to 1 V.

In this specification, the term "specific capacity" means an actual capacity delivered per unit mass of the negative electrode active material.

In some implementations, at the charging rate of 0.05 C, the capacity of the negative electrode plate within the charging range of 0.5 V to 1 V is 18 mAh/g to 70 mAh/g.

Within the charging range of 0.5 V to 1 V, the capacity of the negative electrode plate is further controlled to be 18 mAh/g to 70 mAh/g, helping further balance energy density and storage performance of the sodium secondary battery.

In some implementations, the negative electrode film layer further optionally includes a binder. The binder may include at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer further optionally includes a conductive agent. The conductive agent may include at least one of superconducting carbon, acetylene black, carbon black, Ketjen black, carbon dots, carbon nanotubes, graphene, and carbon nanofibers.

In some implementations, the negative electrode film layer further optionally includes another adjuvant, such as a thickener (for example, sodium carboxymethyl cellulose (CMC-Na)).

In some implementations, the negative electrode plate may be prepared in the following manner: dispersing the foregoing components for preparing the negative electrode plate, such as the negative electrode active material, the conductive agent, the binder, and any other components, in a solvent (for example, deionized water) to form a negative electrode slurry; and coating the negative electrode slurry onto the negative electrode current collector, followed by drying, cold pressing, and other procedures, to obtain the negative electrode plate.

### [Separator]

In some implementations, the sodium secondary battery further includes a separator. Any known separator of a porous structure with good chemical stability and mechanical stability may be used.

In some implementations, a material of the separator may be at least one selected from glass fiber, non-woven fabric, polyethylene, polypropylene, and polyvinylidene difluoride. The separator may be a single-layer film or a multi-layer composite film. When the separator is a multi-layer composite film, all layers may be made of same or different materials.

### [Sodium secondary battery]

In some implementations, the positive electrode plate, the negative electrode plate, and the separator may be made into an electrode assembly by a winding process or a lamination process.

In some implementations, the sodium secondary battery may include an outer package. The outer package may be used for packaging the electrode assembly and the electrolyte.

In some implementations, the outer package of the sodium secondary battery may be a hard shell, such as a hard plastic shell, an aluminum shell, or a steel shell. The outer package of the sodium secondary battery may alternatively be a soft pack, such as a pouch-type soft pack. A material of the soft pack may be plastic, and examples of plastic may include polypropylene, polybutylene terephthalate, and polybutylene succinate.

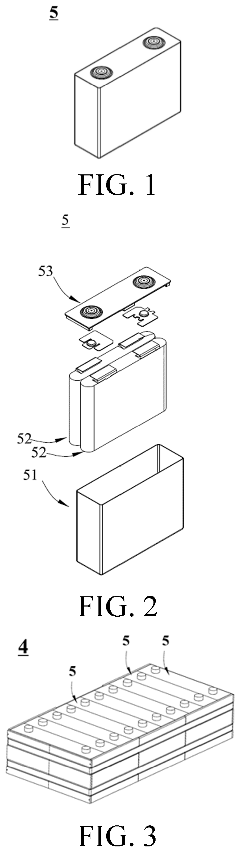

In the present application, a shape of the sodium secondary battery may be cylindrical, square, or any other shapes. For example, FIG. 1 shows a sodium secondary battery 5 of a square structure as an example.

In some implementations, as shown in FIG. 2, an outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 can cover the opening to close the accommodating cavity. The positive electrode plate, the negative electrode plate, and the separator may form an electrode assembly 52 by a winding process or a lamination process. The electrode assembly 52 is packaged in the accommodating cavity. The electrode assembly 52 is immersed in the electrolyte. A quantity of electrode assemblies 52 included in the sodium secondary battery 5 may be one or more, and may be selected by a person skilled in the art according to specific actual requirements.

In some implementations, the sodium secondary battery may be assembled into a battery module. There may be one or more sodium secondary batteries included in the battery module, and a specific quantity may be selected by a person skilled in the art according to the application and capacity of the battery module.

FIG. 3 shows a battery module 4 as an example. As shown in FIG. 3, in the battery module 4, a plurality of sodium secondary batteries 5 may be sequentially arranged in a length direction of the battery module 4. Certainly, the plurality of sodium secondary batteries 5 may alternatively be arranged in any other manner. The plurality of sodium secondary batteries 5 may be further fixed by a fastener.

Optionally, the battery module 4 may further include an outer shell with an accommodating space, and the plurality of sodium secondary batteries 5 are accumulated in the accommodating space.

In some implementations, the battery module may be further assembled into a battery pack. There may be one or more battery modules included in the battery pack, and a specific quantity may be selected by a person skilled in the art according to the application and capacity of the battery pack.

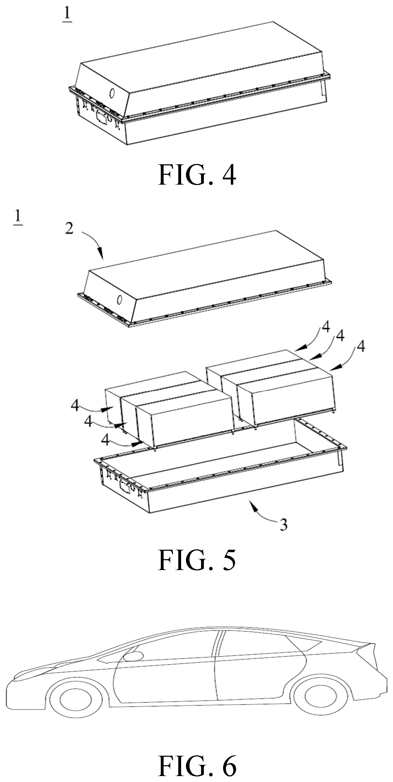

FIG. 4 and FIG. 5 show a battery pack 1 as an example. As shown in FIG. 4 and FIG. 5, the battery pack 1 may include a battery box and a plurality of battery modules 4 arranged in the battery box. The battery box includes an upper box 2 and a lower box 3. The upper box 2 can cover the lower box 3 to form an enclosed space for accommodating the battery modules 4. The plurality of battery modules 4 may be arranged in the battery box in any manner.

In addition, the present application further provides a power-consuming apparatus. The power-consuming apparatus includes at least one of the sodium secondary battery, the battery module, or the battery pack provided in the present application. The sodium secondary battery, the battery module, or the battery pack may be used as a power supply for the power-consuming apparatus, or may be used as an energy storage unit for the power-consuming apparatus. The power-consuming apparatus may include, but is not limited to, a mobile device (for example, a mobile phone or a notebook computer), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, and an energy storage system.

The sodium secondary battery, the battery module, or the battery pack may be selected according to use requirements of the power-consuming apparatus.

FIG. 6 shows a power-consuming apparatus as an example. The power-consuming apparatus is an all-electric vehicle, a hybrid electric vehicle, or a plug-in hybrid electric vehicle. To meet requirements of the power-consuming apparatus for high power and high energy density of the sodium secondary battery, the battery pack or the battery module may be used.

As another example, the apparatus may be a mobile phone, a tablet computer, or a notebook computer. The apparatus usually needs to be light and thin, and the sodium secondary battery may be used as a power supply.

### Examples

The following describes the examples of the present application. The examples described below are exemplary and are merely used for explaining the present application, but are not to be construed as a limitation on the present application. If no specific technique or condition is specified in the examples, a technique or condition described in the literature in the art or a product specification shall be followed. Reagents or instruments used with no indication of manufacturers are conventional products that are commercially available.

### I. Preparation method

### Example 1

### (1) Electrolyte

In an argon-filled glove box (H₂O content < 10 ppm, and O₂ content < 1 ppm), propylene carbonate (PC) and ethyl methyl carbonate (EMC) were mixed in a mass ratio of 30/70, 1 M NaPF₆ was dissolved, and then the first additive sodium difluoro(oxalato)borate and the second additive sodium difluorophosphate were added. The mixture was stirred uniformly to prepare the electrolyte. In percentage by mass of the electrolyte, a mass content of the first additive sodium difluoro(oxalato)borate is 0.5%, and a mass content of the second additive sodium difluorophosphate is 0.5%.

### (2) Preparation of a positive electrode plate

Preparation of Na_{7/9}Cu_{2/9}Fe_{1/9}Mn_{2/3}O₂ (13% Cu): The precursors 0.39 M Na₂CO₃, 0.22 M CuO, 0.06 M Fe₂O₃, and 0.67 M MnO₂ were ball-milled with ethanol as a dispersant in a ball mill for 12 h, and dried. Then, the uniformly mixed powder was pressed at 20 MPa into a pellet and sintered at 900°C for 12 h. The sintered powder needs to be quickly transferred to a glove box for storage.

The positive electrode active material Na_{7/9}Cu_{2/9}Fe_{1/9}Mn_{2/3}O₂ (13% Cu), a conductive agent acetylene black, and a binder polyvinylidene difluoride (PVDF) were stirred fully and mixed uniformly in a weight ratio of 90:5:5 in an N-methylpyrrolidone solvent system, obtaining a positive electrode slurry. The positive electrode slurry was coated at a rate of 0.28 g (dry weight)/1540.25 mm² uniformly onto positive electrode current collector aluminum foil with a thickness of 13 µm. The aluminum foil was air-dried at room temperature, then transferred to an oven at 120°C and dried for 1 h, and then subjected to cold pressing and slitting, obtaining the positive electrode plate.

### (3) Preparation of a negative electrode plate

Negative electrode active material H2 (a capacity of the negative electrode plate within a charging range of 0.5 V to 1 V is 40 mAh/g): A biomass material was calcined in an argon-filled tube furnace at 800°C for 2 h, then washed with hydrochloric acid and deionized water separately and dried, then ground for 2 h and then calcined in an argon-filled tube furnace at 1550°C for 4 h, obtaining the target material with a particle size of 10 µm.

The negative electrode active material H2, a conductive agent acetylene black, a binder styrene butadiene rubber (SBR), a thickener sodium carboxymethylcellulose (CMC-Na), and CaO were stirred fully and mixed uniformly in a weight ratio of 90:4:4:2:0.014 in a deionized water solvent system, obtaining a negative electrode slurry. The negative electrode slurry was coated at a rate of 0.14 g (dry weight)/1540.25 mm² uniformly onto negative electrode current collector copper foil with a thickness of 8 µm. The copper foil was air-dried at room temperature, then transferred to an oven at 120°C and dried for 1 h, and then subjected to cold pressing and slitting, obtaining the negative electrode plate.

### (4) Separator

A 12 µm polyethylene (PE) porous polymer film is used as the separator.

### (5) Preparation of a battery

The positive electrode plate, the separator, and the negative electrode plate were stacked in order, ensuring that the separator was between the positive electrode plate and the negative electrode plate to separate the positive electrode plate from the negative electrode plate, and wound, obtaining a bare cell. Tabs were welded. The bare cell was placed in an outer package. The prepared electrolyte was injected into the dried cell. Then, the cell was subjected to packaging, standing, formation, shaping, capacity testing, and other operations, obtaining a sodium secondary battery product of Example 1.

Preparation methods of secondary batteries of Example 2 to Example 48 and preparation methods of secondary batteries of Comparative Example 1 to Comparative Example 4 are similar to the preparation method of the secondary battery of Example 1, but compositions and product parameters of electrode plates of the batteries are adjusted. Different product parameters are shown in Table 1 Table 2.

In Example 2 to Example 14 and Example 19 to Example 23, the content of the solvent in the electrolyte is adjusted to adjust the mass contents of the first additive, the second additive, and the third additive.

In Example 31 to Example 36, different mass contents of CaO is added during preparation of the negative electrode plate to control the negative electrode material layer to contain different mass contents of the Ca element.

In Example 37 to Example 40, the carbonization temperature of the negative electrode material during preparation is changed and negative electrode materials with different capacities are formulated to effectively adjust the capacity of the negative electrode plate, specifically as follows:

Preparation of negative electrode active material H1 (a capacity of the negative electrode plate within a charging range of 0.5 V to 1 V is 140 mAh/g): A biomass material was calcined in an argon-filled tube furnace at 800°C for 2 h, then washed with hydrochloric acid and deionized water separately and dried, then ground for 2 h and then calcined in an argon-filled tube furnace at 1150°C for 2 h, obtaining the target material with a particle size of 2 µm.

Negative electrode active material H3 (a capacity of the negative electrode plate within a charging range of 0.5 V to 1 V is 9 mAh/g): A biomass material was calcined in an argon-filled tube furnace at 800°C for 2 h, then washed with hydrochloric acid and deionized water separately and dried, then ground for 2 h and then calcined in an argon-filled tube furnace at 1650°C for 6 h, obtaining the target material with a particle size of 20 µm. Increasing the pyrolysis temperature further reduces defects and induces formation of a large amount of ordered micropores. The specific capacity at 0.5 V to 1 V is approximately 9 mAh/g.

Example 37: The negative electrode active material H3, a conductive agent acetylene black, a binder styrene butadiene rubber (SBR), a thickener sodium carboxymethylcellulose (CMC-Na), and CaO were stirred fully and mixed uniformly in a weight ratio of 90:4:4:2:0.014 in a deionized water solvent system, obtaining a negative electrode slurry. The negative electrode slurry was coated at a rate of 0.14 g (dry weight)/1540.25 mm² uniformly onto negative electrode current collector copper foil with a thickness of 8 µm. The copper foil was air-dried at room temperature, then transferred to an oven at 120°C and dried for 1 h, and then subjected to cold pressing and slitting, obtaining the negative electrode plate.

Example 38: 70% of negative electrode active material H3 and 30% of negative electrode active material H2, a conductive agent acetylene black, a binder styrene butadiene rubber (SBR), a thickener sodium carboxymethylcellulose (CMC-Na), and CaO were stirred fully and mixed uniformly in a weight ratio of 90:4:4:2:0.014 in a deionized water solvent system, obtaining a negative electrode slurry. The negative electrode slurry was coated at a rate of 0.14 g (dry weight)/1540.25 mm² uniformly onto negative electrode current collector copper foil with a thickness of 8 µm. The copper foil was air-dried at room temperature, then transferred to an oven at 120°C and dried for 1 h, and then subjected to cold pressing and slitting, obtaining the negative electrode plate.

Example 39: 30% of negative electrode active material H1 and 70% of negative electrode active material H2, a conductive agent acetylene black, a binder styrene butadiene rubber (SBR), a thickener sodium carboxymethylcellulose (CMC-Na), and CaO were stirred fully and mixed uniformly in a weight ratio of 90:4:4:2:0.014 in a deionized water solvent system, obtaining a negative electrode slurry. The negative electrode slurry was coated at a rate of 0.14 g (dry weight)/1540.25 mm² uniformly onto negative electrode current collector copper foil with a thickness of 8 µm. The copper foil was air-dried at room temperature, then transferred to an oven at 120°C and dried for 1 h, and then subjected to cold pressing and slitting, obtaining the negative electrode plate.

Example 40: The negative electrode active material H1, a conductive agent acetylene black, a binder styrene butadiene rubber (SBR), a thickener sodium carboxymethylcellulose (CMC-Na), and CaO were stirred fully and mixed uniformly in a weight ratio of 90:4:4:2:0.014 in a deionized water solvent system, obtaining a negative electrode slurry. The negative electrode slurry was coated at a rate of 0.14 g (dry weight)/1540.25 mm² uniformly onto negative electrode current collector copper foil with a thickness of 8 µm. The copper foil was air-dried at room temperature, then transferred to an oven at 120°C and dried for 1 h, and then subjected to cold pressing and slitting, obtaining the negative electrode plate.

In Example 41 to Example 44, the stoichiometric ratio of the precursors Fe₂O₃, CuO, MnO₂, and Na₂CO₃ during sintering is adjusted and positive electrode materials containing different contents of the Cu element during preparation of the positive electrode plate are formulated to control the positive electrode active material to contain different mass contents of the Cu element, specifically as follows:
Preparation of Na_{1/2}Fe_{1/2}Mn_{1/2}O₂ (0% Cu): The precursors 0.25 M Na₂CO₃, 0.25 M Fe₂O₃, and 0.5 M MnO₂ were ball-milled with ethanol as a dispersant in a ball mill for 12 h, and dried. Then, the uniformly mixed powder was pressed at 20 MPa into a pellet and sintered at 900°C for 12 h. The sintered powder needs to be quickly transferred to a glove box for storage.

Preparation of Na_{9/10}Cu_{2/5}Fe_{1/10}Mn_{1/2}O₂ (23% Cu): The precursors 0.45 M Na₂CO₃, 0.4 M CuO, 0.05 M Fe₂O₃, and 0.5 M MnO₂ were ball-milled with ethanol as a dispersant in a ball mill for 12 h, and dried. Then, the uniformly mixed powder was pressed at 20 MPa into a pellet and sintered at 900°C for 12 h. The sintered powder needs to be quickly transferred to a glove box for storage.

Example 41: The positive electrode active material Na_{1/2}Fe_{1/2}Mn_{1/2}O₂, a conductive agent acetylene black, and a binder polyvinylidene difluoride (PVDF) were stirred fully and mixed uniformly in a weight ratio of 90:5:5 in an N-methylpyrrolidone solvent system, obtaining a positive electrode slurry. The positive electrode slurry was coated at a rate of 0.28 g (dry weight)/1540.25 mm² uniformly onto positive electrode current collector aluminum foil with a thickness of 13 µm. The aluminum foil was air-dried at room temperature, then transferred to an oven at 120°C and dried for 1 h, and then subjected to cold pressing and slitting, obtaining the positive electrode plate.

Example 42: 50% of positive electrode active material Na_{1/2}Fe_{1/2}Mn_{1/2}O₂ and 50% of positive electrode active material Na_{7/9}Cu_{2/9}Fe_{1/9}Mn_{2/3}O₂, a conductive agent acetylene black, and a binder polyvinylidene difluoride (PVDF) were stirred fully and mixed uniformly in a weight ratio of 90:5:5 in an N-methylpyrrolidone solvent system, obtaining a positive electrode slurry. The positive electrode slurry was coated at a rate of 0.28 g (dry weight)/1540.25 mm² uniformly onto positive electrode current collector aluminum foil with a thickness of 13 µm. The aluminum foil was air-dried at room temperature, then transferred to an oven at 120°C and dried for 1 h, and then subjected to cold pressing and slitting, obtaining the positive electrode plate.

Example 43: 50% of positive electrode active material Na_{7/9}Cu_{2/9}Fe_{1/9}Mn_{2/3}O₂ and 50% of positive electrode active material Na_{9/10}Cu_{2/5}Fe_{1/10}Mn_{1/2}O₂, a conductive agent acetylene black, and a binder polyvinylidene difluoride (PVDF) were stirred fully and mixed uniformly in a weight ratio of 90:5:5 in an N-methylpyrrolidone solvent system, obtaining a positive electrode slurry. The positive electrode slurry was coated at a rate of 0.28 g (dry weight)/1540.25 mm² uniformly onto positive electrode current collector aluminum foil with a thickness of 13 µm. The aluminum foil was air-dried at room temperature, then transferred to an oven at 120°C and dried for 1 h, and then subjected to cold pressing and slitting, obtaining the positive electrode plate.

Example 44: The positive electrode active material Na_{9/10}Cu_{2/5}Fe_{1/10}Mn_{1/2}O₂, a conductive agent acetylene black, and a binder polyvinylidene difluoride (PVDF) were stirred fully and mixed uniformly in a weight ratio of 90:5:5 in an N-methylpyrrolidone solvent system, obtaining a positive electrode slurry. The positive electrode slurry was coated at a rate of 0.28 g (dry weight)/1540.25 mm² uniformly onto positive electrode current collector aluminum foil with a thickness of 13 µm. The aluminum foil was air-dried at room temperature, then transferred to an oven at 120°C and dried for 1 h, and then subjected to cold pressing and slitting, obtaining the positive electrode plate.

### II. Performance testing

### 1. Electrolyte

### (1) Testing of the content of the first additive/second additive/third additive in the electrolyte

The testing of the content of the first additive and the content of the second additive in the electrolyte of the sodium secondary battery may be performed according to the general rules for ion chromatography in the general rules for analytical methods with modern analytical instruments (JY/T 020-1996, issued on January 23, 1997, and effective from April 1, 1997). Cations and anions in the electrolyte are tested and analyzed by ion chromatography.

The testing of the content of the third additive in the electrolyte of the sodium secondary battery may be performed qualitatively and quantitatively by organic component gas chromatography according to GB/T 6041-2002 and GB/T 9722-2006.

### 2. Positive electrode plate/Negative electrode plate

### (1) Measurement of the content of the Cu element in the positive electrode active material

The testing of the content of the Cu element in the positive electrode active material may be performed by inductively coupled plasma atomic emission spectrometry according to the general rules EPA 6010D-2014.

### (2) Measurement of the content of the Ca element in the negative electrode material layer

The testing of the content of the Ca element in the negative electrode material may be performed by inductively coupled plasma atomic emission spectrometry according to the general rules EPA 6010D-2014.

### (3) Testing of the capacity of the negative electrode plate within the range of 0.5 V to 1 V

The negative electrode plate was die-cut into a small disk with a diameter of 14 mm, and was then assembled with a metal sodium sheet as a negative electrode, a polypropylene film as a separator, and a 1.3 mol/L sodium hexafluorophosphate solution as a test electrolyte into a button cell, where a solvent in the electrolyte includes ethylene carbonate, dimethyl carbonate, and methyl ethyl carbonate in a mass ratio of 1:2:2. The button cell was subjected to a constant-current charge/discharge test within a voltage range of 0.005 V to 2 V. In a discharging process, the button cell was discharged at a constant current sequentially at rates of 0.05 C, 40 µA, and 10 µA to 0.005 V. In a charging process, the button cell was charged at a constant current at a rate of 0.05 C to 2 V. In the charging process, a specific capacity (mAh/g) at 0.5 V to 1 V is recorded as a capacity of the negative electrode plate within the range of 0.5 V to 1 V.

### 3. Battery

### (1) High-temperature storage volume change rate

At 25°C, the new sodium secondary batteries prepared in the examples and the comparative examples were left to stand for 5 minutes, charged at a constant current at a rate of 1 C to 4.0 V, then charged at a constant voltage until a current was less than or equal to 0.05 C, then left to stand for 5 minutes, then discharged at a constant current at a rate of 1 C to 1.5 V, and then measured in volume by using the water displacement method, obtaining a volume V1 of the battery. Then, the battery was placed in an oven at 60°C and stored for two months. Then, the battery was taken out and measured in volume, obtaining a volume V2. The volume change rate of the battery is (V2-V1)/V1 × 100%.

### (2) Charging performance at -10°C

Preparation of a three-electrode battery: First, a sodium vanadium phosphate reference electrode was prepared. The active material sodium vanadium phosphate, a conductive agent acetylene black, and a binder polyvinylidene difluoride (PVDF) were stirred fully and mixed uniformly in a weight ratio of 90:5:5 in an N-methylpyrrolidone solvent system, obtaining a slurry. The slurry was coated uniformly onto an aluminum wire with a length of 10 cm (where a coated region occupied 1 cm), and dried at 100°C, obtaining the target reference electrode. During preparation of the sodium secondary battery, the reference electrode was placed between the negative electrode plate and the separator, obtaining the three-electrode battery.

Testing of charging performance at -10°C: At 25°C, the three-electrode battery containing the reference electrode was charged at a constant current at 0.1 C to a voltage of 4.0 V, then charged at a constant voltage until a current was less than or equal to 0.05 C, then left to stand for 5 minutes, and then discharged at a constant current at a rate of 0.1 C to 1.5 V, recording a discharge capacity C1. Then, the battery was left in an environment at -10°C to stand for 2 h, and charged at a constant current at 0.1 C to a voltage of 4.0 V, obtaining a charge capacity C2 before a negative electrode potential being -3.377 V relative to a reference potential. The charging performance of the battery at -10°C is C2/C1 × 100%.

### (3) Direct current resistance

At -25°C, the state of charge of a cell was adjusted to 50% SOC, and the cell was left to stand for 30 min, recording a battery voltage U1 (V). The cell was discharged at 0.36 C for 10s, recording a battery voltage U2 (V). Correspondingly, a discharging current I (mA) of the cell is 0.36 × design capacity (mAh) of the cell. Direct current resistance DCR (mQ) = (U1-U2)/I.

### (4) Cycling performance

At 25°C, the prepared battery was charged at a constant current at 1 C to 4.0 V, then charged at a constant voltage of 4.0 V until a current decreased to 0.05 C, left to stand for 5 min, and then discharged at a constant current at 1 C to 1.5 V. This was an initial charge/discharge cycle of the battery. A discharge capacity at this time was recorded as a discharge capacity (C0) of the battery in the initial cycle. The foregoing steps were repeated for the same battery. A discharge capacity (C1) of the battery was obtained after 300 cycles. After 300 cycles, a capacity retention rate is C1/C0 × 100%. Testing process for the comparative examples and the other examples are the same as above.

### III. Analysis of testing results of the examples and comparative examples

The batteries in the examples and comparative examples were prepared separately according to the foregoing method, and various performance parameters were measured. The results are shown in Table 1 and Table 2 below.

**Table 1**

| Sequence number | Electrolyte | | | | | | | | | | |
|---|---|---|---|---|---|---|---|---|---|---|---|
| | Electrode plate | | First additive | | Second additive | | Mass ratio of the first | Third additive | | Sodium salt | Solvent |
| | Positive electrode plate | Negative electrode plate | Substance | Mass content/% | Substance | Mass content/% | additive to the second additive | Substance | Mass content/% | | |
| Example 1 | Positive electrode plate C | Negative electrode plate C | Sodium difluoro(oxalato)borate | 0.5 | Sodium difluorophosphate | 0.5 | 1 | / | / | NaPF₆ | PC + EMC (mass ratio 3:7) |
| Example 2 | Positive electrode plate C | Negative electrode plate C | Sodium difluoro(oxalato)borate | 0.1 | Sodium difluorophosphate | 0.5 | 0.2 | / | / | NaPF₆ | PC + EMC (mass ratio 3:7) |
| Example 3 | Positive electrode plate C | Negative electrode plate C | Sodium difluoro(oxalato)borate | 0.005 | Sodium difluorophosphate | 0.5 | 0.01 | / | / | NaPF₆ | PC + EMC (mass ratio 3:7) |
| Example 4 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 5 | Positive electrode plate C | Negative electrode plate C | Sodium difluoro(oxalato)borate | 2 | Sodium difluorophosphate | 0.5 | 4 | / | / | NaPF₆ | PC + EMC (mass ratio 3:7) |
| Example 6 | Positive electrode plate C | Negative electrode plate C | Sodium difluoro(oxalato)borate | 5 | Sodium difluorophosphate | 0.5 | 10 | / | / | NaPF₆ | PC + EMC (mass ratio 3:7) |
| Example 7 | Positive electrode plate C | Negative electrode plate C | Sodium difluoro(oxalato)borate | 1 | Sodium difluorophosphate | 0.1 | 10 | / | / | NaPF₆ | PC + EMC (mass ratio 3:7) |
| Example 8 | Positive electrode plate C | Negative electrode plate C | Sodium difluoro(oxalato)borate | 1 | Sodium difluorophosphate | 0.005 | 200 | / | / | NaPF₆ | PC + EMC (mass ratio 3:7) |
| Example 9 | Positive electrode plate C | Negative electrode plate C | Sodium difluoro(oxalato)borate | 1 | Sodium difluorophosphate | 2 | 0.5 | / | / | NaPF₆ | PC + EMC (mass ratio 3:7) |
| Example 10 | Positive electrode plate C | Negative electrode plate C | Sodium difluoro(oxalato)borate | 1 | Sodium difluorophosphate | 5 | 0.2 | / | / | NaPF₆ | PC + EMC (mass ratio 3:7) |
| Example 11 | Positive electrode plate C | Negative electrode plate C | Sodium difluoro(oxalato)borate | 2 | Sodium difluorophosphate | 0.005 | *400* | / | / | NaPF₆ | PC + EMC ***(mass** ratio* 3:7) |
| Example 12 | *Positive* electrode plate C | *Negative* electrode plate C | Sodium difluoro(oxalato)borate | 0.005 | Sodium difluorophosphate | 1 | 0.005 | / | / | NaPF₆ | PC + EMC (mass ratio 3:7) |
| Example 13 | Positive electrode plate C | Negative electrode plate C | Sodium difluoro(oxalato)borate | 1 | Sodium fluorosulfonate | 0.5 | 2 | / | / | NaPF₆ | PC + EMC (mass ratio 3:7) |
| Example 14 | Positive electrode plate C | Negative electrode plate C | Sodium difluoro(oxalato)borate | 0.005 | Sodium fluorosulfonate | 0.5 | 0.01 | / | / | NaPF₆ | PC + EMC (mass ratio 3:7) |
| Example 15 | Positive electrode plate C | Negative electrode plate C | Lithium difluoro(exalato)borate | 1 | Sodium difluorophosphate | 0.5 | 2 | / | / | NaPF₆ | PC + EMC (mass ratio 3:7) |
| Example 16 | Positive electrode plate C | Negative electrode plate C | Magnesium difluoro(oxalato)borate | 1 | Sodium difluorophosphate | 0.5 | 2 | / | / | NaPF₆ | PC + EMC (mass ratio 3:7) |
| Example 17 | Positive electrode plate C | Negative electrode plate C | Sodium difluoro(oxalato)borate | 1 | Lithium difluorophosphate | 0.5 | 2 | / | / | NaPF₆ | PC + EMC (mass ratio 3:7) |
| Example 18 | Positive electrode plate C | Negative electrode plate C | Sodium difluoro(oxalato)borate | 1 | Aluminum fluorosulfonate | 0.5 | 2 | / | / | NaPF₆ | PC + EMC (mass ratio 3:7) |
| Example 19 | Positive electrode plate C | Negative electrode plate C | Sodium difluoro(oxalato)borate | 1 | Sodium difluorophosphate | 0.5 | 2 | FEC | 1 | NaPF₆ | PC + EMC (mass ratio 3:7) |
| Example 20 | Positive electrode plate C | Negative electrode plate C | Sodium difluoro(oxalato)borate | 1 | Sodium difluorophosphate | 0.5 | 2 | FEC | 0.05 | NaPF₆ | PC + EMC (mass ratio 3:7) |
| Example 21 | Positive electrode plate C | Negative electrode plate C | Sodium difluoro(oxalato)borate | 1 | Sodium difluorophosphate | 0.5 | 2 | FEC | 0.1 | NaPF₆ | PC + EMC (mass ratio 3:7) |
| Example 22 | Positive electrode plate C | Negative electrode plate C | Sodium difluoro(oxalato)borate | 1 | Sodium difluorophosphate | 0.5 | 2 | FEC | 5 | NaPF₆ | PC + EMC (mass ratio 3:7) |
| Example 23 | Positive electrode plate C | Negative electrode plate C | Sodium difluoro(oxalato)borate | 1 | Sodium difluorophosphate | 0.5 | 2 | FEC | 10 | NaPF₆ | PC + EMC (mass ratio 3:7) |
| Example 24 | Positive electrode plate C | Negative electrode plate C | Sodium difluoro(oxalato)borate | 1 | Sodium difluorophosphate | *0.5* | 2 | VC | 1 | NaPF₆ | PC + EMC (mass ratio 3:7) |
| Example 25 | *Positive* electrode plate C | Negative electrode plate C | Sodium difluoro(oxalato)borate | 1 | Sodium difluorophosphate | 0.5 | 2 | VEC | 1 | NaPF₆ | PC + EMC (mass ratio 3:7) |
| Example 26 | Positive electrode plate C | Negative electrode plate C | Sodium difluoro(oxalato)borate | 1 | Sodium difluorophosphate | 0.5 | 2 | Maleic anhydride | 1 | NaPF₆ | PC + EMC (mass ratio 3:7) |
| Example 27 | Positive electrode plate C | Negative electrode plate C | Sodium difluoro(oxalato)borate | 1 | Sodium difluorophosphate | 0.5 | 2 | / | / | NaFSI | PC + EMC (mass ratio 3:7) |
| Example 28 | Positive electrode plate C | Negative electrode plate C | Sodium difluoro(oxalato)borate | 1 | Sodium difluorophosphate | 0.5 | 2 | / | / | NaFSI + NaPF₆ (molar ratio 1:1) | PC + EMC (mass ratio 3:7) |
| Example 29 | Positive electrode plate C | Negative electrode plate C | Sodium difluoro(oxalato)borate | 1 | Sodium difluorophosphate | 0.5 | 2 | / | / | NaPF₆ | PC + EMC +DG (mass ratio 2:6:2) |
| Example 30 | Positive electrode plate C | Negative electrode plate C | Sodium difluoro(oxalato)borate | 1 | Sodium difluorophosphate | 0.5 | 2 | / | / | NaPF₆ | PC + EMC + EP (mass ratio 2:6:2) |
| Example 31 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 32 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 33 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 34 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 35 | Positive electrode plate C | Negative electrode plate C | Sodium difluoro(oxalato)borate | 1 | Sodium difluorophosphate | 0.5 | 2 | / | / | NaPF₆ | PC + EMC (mass ratio 3:7) |
| Example 36 | Positive electrode plate C | Negative electrode plate C | Sodium difluoro(oxalato)borate | 1 | Sodium difluorophosphate | 0.1 | 10 | / | / | NaPF₆ | **PC** + EMC (mass ratio 3:7) |
| Example 37 | Positive electrode plate C | Negative electrode plate A | Sodium difluoro(oxalato)borate | 1 | Sodium difluorophosphate | 0.5 | 2 | / | / | NaPF₆ | PC + EMC (mass ratio 3:7) |
| Example 38 | Positive electrode plate C | Negative electrode plate B | Sodium difluoro(oxalato)borate | 1 | Sodium difluorophosphate | 0.5 | 2 | / | / | NaPF₆ | PC + EMC (mass ratio 3:7) |
| Example 39 | Positive electrode plate C | Negative electrode plate D | Sodium difluoro(oxalato)borate | 1 | Sodium difluorophosphate | 0.5 | 2 | / | / | NaPF₆ | PC + EMC (mass ratio 3:7) |
| Example 40 | Positive electrode plate C | Negative electrode plate E | Sodium difluoro(oxalato)borate | 1 | Sodium difluorophosphate | 0.5 | 2 | / | / | NaPF₆ | PC + EMC (mass ratio 3:7) |
| Example 41 | Positive electrode plate A | Negative electrode plate C | Sodium difluoro(oxalato)borate | 1 | Sodium difluorophosphate | 0.5 | 2 | / | / | NaPF₆ | PC + EMC (mass ratio 3:7) |
| Example 42 | Positive electrode plate B | Negative electrode plate C | Sodium difluoro(oxalato)borate | 1 | Sodium difluorophosphate | 0.5 | 2 | / | / | NaPF₆ | PC + EMC (mass ratio 3:7) |
| Example 43 | Positive electrode plate D | Negative electrode plate C | Sodium difluoro(oxalato)borate | 1 | Sodium difluorophosphate | 0.5 | 2 | / | / | NaPF₆ | PC + EMC (mass ratio 3:7) |
| Example 44 | Positive electrode plate E | Negative electrode plate C | Sodium difluoro(oxalato)borate | 1 | Sodium difluorophosphate | 0.5 | 2 | / | / | NaPF₆ | PC + EMC (mass ratio 3:7) |
| Comparative Example 1 | *Positive* electrode plate C | Negative electrode plate C | / | / | / | / | / | / | / | NaPF₆ | PC + EMC (mass ratio 3:7) |
| Comparative Example 2 | Positive electrode plate C | Negative electrode plate C | Sodium difluoro(oxalato)borate | 1 | / | / | / | / | / | NaPF₆ | PC + EMC (mass ratio 3:7) |
| Comparative Example 3 | Positive electrode plate C | Negative electrode plate C | / | / | Sodium difluorophosphate | 0.5 | / | / | / | NaPF₆ | PC + EMC (mass ratio 3:7) |
| Comparative Example 4 | Positive electrode plate C | Negative electrode plate C | / | / | Sodium fluorosulfonate | 0.5 | / | / | / | NaPF₆ | PC + EMC (mass ratio 3:7) |

**Table 2**

| Sequence number | Negative electrode plate | | | Positive electrode plate | | Battery | | | |
|---|---|---|---|---|---|---|---|---|---|
| | Mass content of Ca in a negative electrode material layer/ppm | Ratio of a mass content of a first additive to the mass content of Ca | Capacity within a range of 0.5 V to 1 V/(mAh/g) | Mass content of Cu in a positive electrode active material/% | Ratio of the mass content of the first additive to the mass content of Cu | Battery volume expansion rate after high-temperature storage/% | Charging performance at -10°C/% | Direct current resistance (mΩ) | Cycle capacity retention rate (%) |
| Example 1 | 100 | 50 | 40 | 13 | 0.038 | 14.5 | 90.5 | 988 | 89.6 |
| Example 2 | 100 | 10 | 40 | 13 | 0.008 | 19.3 | 87.8 | 1042 | 82.6 |
| Example 3 | 100 | 0.5 | 40 | 13 | 0.000 | 26.3 | 83.5 | 1037 | 79.7 |
| Example 4 | 100 | 100 | 40 | 13 | 0.077 | 12 | 92.7 | 900 | 90.1 |
| Example 5 | 100 | 200 | 40 | 13 | 0.154 | 16.1 | 90.7 | 923 | 90.7 |
| Example 6 | 100 | 500 | 40 | 13 | 0.385 | 19.4 | 87.2 | 1098 | 81.3 |
| Example 7 | 100 | 100 | 40 | 13 | 0.077 | 16.7 | 90.3 | 974 | 82.4 |
| Example 8 | 100 | 100 | 40 | 13 | 0.077 | 17 | 89.1 | 967 | 80.3 |
| Example 9 | 100 | 100 | 40 | 13 | 0.077 | 18.5 | 90.2 | 1012 | 90.8 |
| Example 10 | 100 | 100 | 40 | 13 | 0.077 | 16.8 | 87.1 | 1068 | 81.6 |
| Example 11 | 100 | 200 | 40 | 13 | 0.154 | 16.7 | 88.1 | 1052 | 81.1 |
| Example 12 | 100 | 0.5 | 40 | 13 | 0.000 | 20.7 | 85.4 | 1086 | 80.3 |
| Example 13 | 100 | 100 | 40 | 13 | 0.077 | 11.8 | 92.8 | 895 | 90.6 |
| Example 14 | 100 | 0.5 | 40 | 13 | 0.000 | 27 | 82.8 | 1098 | 80.4 |
| Example 15 | 100 | 100 | 40 | 13 | 0.077 | 13.4 | 91.8 | 933 | 89.6 |
| Example 16 | 100 | 100 | 40 | 13 | 0.077 | 13.9 | 91.1 | 941 | 87.2 |
| Example 17 | 100 | 100 | 40 | 13 | 0.077 | 13.3 | 91.9 | 912 | 90.2 |
| Example 18 | 100 | 100 | 40 | 13 | 0.077 | 13.8 | 91.2 | 945 | 89.2 |
| Example 19 | 100 | 100 | 40 | 13 | 0.077 | 10.2 | 94.4 | 871 | 92.5 |
| Example 20 | 100 | 100 | 40 | 13 | 0.077 | 11.9 | 92.9 | 899 | 90.2 |
| Example 21 | 100 | 100 | 40 | 13 | 0.077 | 11.3 | 93.1 | 891 | 90.4 |
| Example 22 | 100 | 100 | 40 | 13 | 0.077 | 10 | 94.6 | 887 | 90.5 |
| Example 23 | 100 | 100 | 40 | 13 | 0.077 | 10.3 | 92.1 | 946 | 89.4 |
| Example 24 | 100 | 100 | 40 | 13 | 0.077 | 10.6 | 93.7 | 884 | 90.9 |
| Example 25 | 100 | 100 | 40 | 13 | 0.077 | 10.7 | 93.4 | 880 | 91 |
| Example 26 | 100 | 100 | 40 | 13 | 0.077 | 10.3 | 94.2 | 876 | 91.2 |
| Example 27 | 100 | 100 | 40 | 13 | 0.077 | 11.9 | 93 | 883 | 91.5 |
| Example 28 | 100 | 100 | 40 | 13 | 0.077 | 11.2 | 93.7 | 891 | 91 |
| Example 29 | 100 | 100 | 40 | 13 | 0.077 | 12.5 | 92.1 | 923 | 89.5 |
| Example 30 | 100 | 100 | 40 | 13 | 0.077 | 12.8 | 91.9 | 916 | 89.9 |
| Example 31 | 50 | 200 | 40 | 13 | 0.077 | 12.4 | 92.1 | 889 | 89.7 |
| Example 32 | 300 | 33.33333333 | 40 | 13 | 0.077 | 11.8 | 92.6 | 896 | 90.6 |
| Example 33 | 1000 | 10 | 40 | 13 | 0.077 | 14.6 | 91.1 | 908 | 89.6 |
| Example 34 | 2000 | 5 | 40 | 13 | 0.077 | 14.9 | 90.9 | 945 | 87.5 |
| Example 35 | 3000 | 3.333333333 | 40 | 13 | 0.077 | 15.2 | 85.2 | 1105 | 79.8 |
| Example 36 | 1000 | 10 | 40 | 13 | 0.077 | 15.1 | 90.3 | 985 | 81.2 |
| Example 37 | 100 | 100 | 9 | 13 | 0.077 | 19.2 | 78 | 1175 | 74.1 |
| Example 38 | 100 | 100 | 18.3 | 13 | 0.077 | 11.2 | 91.5 | 878 | 89.3 |
| Example 39 | 100 | 100 | 70 | 13 | 0.077 | 14.1 | 92.8 | 934 | 89.5 |
| Example 40 | 100 | 100 | 140 | 13 | 0.077 | 17.9 | 91.2 | 987 | 85.2 |
| Example 41 | 100 | 100 | 40 | 0 | / | 10.8 | 91.4 | 905 | 85.7 |
| Example 42 | 100 | 100 | 40 | 6.5 | 0.154 | 11.2 | 92 | 913 | 86.3 |
| Example 43 | 100 | 100 | 40 | 18 | 0.056 | 12.8 | 92.6 | 918 | 89.9 |
| Example 44 | 100 | 100 | 40 | 23 | 0.043 | 14.6 | 90.5 | 923 | 88.7 |
| Comparative Example 1 | 100 | / | 40 | 13 | / | 42.2 | 75.1 | 1356 | 63.9 |
| Comparative Example 2 | 100 | / | 40 | 13 | / | 19.7 | 89.3 | 1034 | 81.9 |
| Comparative Example 3 | 100 | / | 40 | 13 | / | 26.4 | 83.3 | 1259 | 79.4 |
| Comparative Example 4 | 100 | / | 40 | 13 | / | 27.2 | 82.5 | 1265 | 80.2 |

In Example 1 to Example 44, the electrolyte includes the first additive and the second additive. The first additive includes sodium difluoro(oxalato)borate, lithium difluoro(oxalato)borate, or magnesium difluoro(oxalato)borate. The second additive includes sodium difluorophosphate, lithium difluorophosphate, sodium fluorosulfonate, or aluminum fluorosulfonate. The sodium secondary battery including the electrolyte exhibits excellent storage performance, cycling performance, and fast charging performance.

It can be learned from the comparison between Examples 1 to 18 and Comparative Example 1 that the electrolyte including the first additive and the second additive can greatly reduce an amount of gas generated by the sodium secondary battery, helping reduce the volume expansion rate of the sodium secondary battery after high-temperature storage and reduce the direct current resistance of the sodium secondary battery, and improve the charging performance and the cycle capacity retention rate of the sodium secondary battery.

It can be learned from the comparison between Examples 1 to 6 and Comparative Example 3, and the comparison between Examples 13 and 14 and Comparative Example 4 that, compared with the electrolyte including only the second additive, the electrolyte in the present application includes both the first additive and the second additive, reducing an amount of gas generated by the sodium secondary battery, thereby helping reduce the volume expansion rate of the sodium secondary battery after high-temperature storage and reduce the direct current resistance of the sodium secondary battery, and improve the charging performance and the cycle capacity retention rate of the sodium secondary battery.

It can be learned from the comparison between Examples 7 to 10 and Comparative Example 2 that, compared with the electrolyte including only the first additive, the electrolyte in the present application includes both the first additive and the second additive, which can greatly reduce an amount of gas generated by the sodium secondary battery, helping reduce the volume expansion rate of the sodium secondary battery after high-temperature storage, and improve the safety of the sodium secondary battery.

It can be learned from the comparison between Examples 1 to 10 and Comparative Examples 2 and 3, and the comparison between Examples 13 and 14 and Comparative Examples 2 and 4 that, compared with the electrolyte including only the first additive or the second additive, the electrolyte in the present application includes both the first additive and the second additive, so that the storage performance and the charging performance of the sodium secondary battery can be balanced, comprehensively improving the cycling performance of the sodium secondary battery.

It can be learned from Example 1 to Example 12 that, the mass ratio of the first additive sodium difluoro(oxalato)borate to the second additive sodium difluorophosphate is controlled to be 0.005 to 500, so that the sodium secondary battery exhibits excellent storage performance, cycling performance, and charging performance. It can be learned from the comparison between Examples 1 to 10 and Comparative Examples 11 and 12 that, the mass ratio of the first additive sodium difluoro(oxalato)borate to the second additive sodium difluorophosphate is further controlled to be 0.01 to 200, so that the storage performance and the charging performance of the sodium secondary battery can be balanced, comprehensively improving the cycling performance of the sodium secondary battery.

It can be learned from Example 1 to Example 6 that, in percentage by mass of the electrolyte, in percentage by mass of the electrolyte, the mass content of the first additive sodium difluoro(oxalato)borate is controlled to be 0.005% to 5%, so that the sodium secondary battery exhibits excellent storage performance, cycling performance, and charging performance. It can be learned from the comparison between Examples 1, 2, 4, and 5 and Examples 3 and 6 that, in percentage by mass of the electrolyte, the mass content of the first additive sodium difluoro(oxalato)borate is further controlled to be 0.1% to 2%, further helping reduce the direct current resistance of the sodium secondary battery and the volume expansion rate of the sodium secondary battery after high-temperature storage, and improve the charging performance and the storage performance of the sodium secondary battery, further comprehensively improving the cycling performance of the sodium secondary battery.

It can be learned from Examples 4, 7 to 10 that, in percentage by mass of the electrolyte, the mass content of the second additive sodium difluorophosphate is controlled to be 0.005% to 5%, so that the sodium secondary battery exhibits excellent storage performance, cycling performance, and charging performance. It can be learned from the comparison between Examples 4, 7, and 9 and Examples 8 and 10 that, in percentage by mass of the electrolyte, the mass content of the first additive sodium difluorophosphate is further controlled to be 0.1% to 2%, further helping reduce the volume expansion rate of the sodium secondary battery after high-temperature storage and the direct current resistance of the sodium secondary battery, and improve the storage performance and the charging performance of the sodium secondary battery, further comprehensively improving the cycling performance of the sodium secondary battery.

It can be learned from Examples 4, 13 to 18, the first additive is sodium difluoro(oxalato)borate, lithium difluoro(oxalato)borate, or magnesium difluoro(oxalato)borate, and the second additive is sodium difluorophosphate, lithium difluorophosphate, sodium fluorosulfonate, or aluminum fluorosulfonate, which allows the sodium secondary battery to exhibit excellent storage performance, cycling performance, and charging performance.

It can be learned from the comparison between Examples 19 to 26 and Example 4 that, the third additive is introduced into the electrolyte, and the third additive is fluorinated carbonate, vinylene carbonate, vinyl ethylene carbonate, or maleic anhydride, which helps reduce the volume expansion rate of the sodium secondary battery after high-temperature storage, improving the safety of the sodium secondary battery. It can be learned from Example 19 to Example 23 that, in percentage by mass of the electrolyte, the mass content of the third additive is controlled to be 0.05% to 10%, so that the sodium secondary battery exhibits excellent storage performance, cycling performance, and charging performance. It can be learned from the comparison between Examples 19, 21, and 22 and Examples 20 and 23 that, in percentage by mass of the electrolyte, the mass content of the third additive is further controlled to be 0.1% to 5%, further helping reduce the direct current resistance of the sodium secondary battery and the volume expansion rate of the sodium secondary battery after high-temperature storage, and improve the charging performance and the cycle capacity retention rate of the sodium secondary battery.

It can be learned from Examples 4, 27, and 28 that the lithium salt in the electrolyte is NaFSI and/or NaPF₆. The combined use of the lithium salt, the first additive, and the second additive allows the sodium secondary battery to exhibit excellent storage performance, cycling performance, and charging performance.

It can be learned from Examples 4, 29, and 30 that the solvent in the electrolyte is two or more of PC, EMC, DG, and EP. The combined use of the solvent, the first additive, and the second additive allows the sodium secondary battery to exhibit excellent storage performance, cycling performance, and charging performance.

It can be learned from Examples 4, 31 to 36 that the mass content of the Ca element in the negative electrode material layer is controlled to be 50 ppm to 3000 ppm. The combined use of the Ca element, the first additive, and the second additive allows the sodium secondary battery to exhibit excellent storage performance, cycling performance, and charging performance.

It can be learned from Examples 4, 31 to 36 that the ratio of the mass content of sodium difluoro(oxalato)borate in the electrolyte to the mass content of the Ca element in the negative electrode material layer is controlled to be greater than 1, so that the sodium secondary battery can exhibit excellent storage performance, cycling performance, and charging performance.

It can be learned from Examples 4, 37 to 40 that, at the charging rate of 0.05 C, the capacity of the negative electrode plate within the charging range of 0.5 V to 1 V is controlled to be 9 mAh/g to 140 mAh/g, so that the sodium secondary battery can exhibit excellent storage performance, cycling performance, and charging performance. It can be learned from the comparison between Examples 4, 38, and 39 and Examples 37 and 39 that, at the charging rate of 0.05 C, the capacity of the negative electrode plate within the charging range of 0.5 V to 1 V is further controlled to be 40 mAh/g to 70 mAh/g, further helping reduce the direct current resistance of the sodium secondary battery and the volume expansion rate of the sodium secondary battery after high-temperature storage, and improve the charging performance and the cycle capacity retention rate of the sodium secondary battery.

It can be learned from the comparison between Examples 4, 42 to 44 and Example 41 that the introduction of the Cu element into the positive electrode active material can improve the cycle capacity retention rate of the sodium secondary battery.

It can be learned from Examples 4, 42 to 44 that the ratio of the mass content of difluoro(oxalato)borate in the electrolyte to the mass content of the Cu element in the positive electrode active material is controlled to be greater than 0.002, so that the sodium secondary battery can exhibit excellent storage performance, cycling performance, and charging performance.

It can be learned from Examples 4, 42 to 44 that the mass content of the Cu element in the positive electrode active material is controlled to be less than or equal to 23%, so that the sodium secondary battery can exhibit excellent storage performance, cycling performance, and charging performance. It can be learned from the comparison between Examples 4, 42, and 43 and Example 44 that the mass content of the Cu element in the positive electrode active material is controlled to be 6.5% to 18%, so that the storage performance, the cycling performance, and the charging performance can be improved.

It needs to be noted that, the present application is not limited to the foregoing implementations. The foregoing implementations are merely exemplary. Within the scope of the technical solutions of the present application, implementations that have the composition substantially the same as the technical idea and that achieve the same effects fall within the technical scope of the present application. In addition, without departing from the scope of the essence of the present application, various modifications conceivable to a person skilled in the art that are applied to the implementations, and other implementations formed by combining some constituent elements of the implementations also fall within the scope of the present application.

## Claims

1. An electrolyte for a sodium secondary battery, comprising a first additive and a second additive, wherein the first additive comprises difluoro(oxalato)borate, and the second additive comprises one or more of fluorosulfonate and difluorophosphate, wherein
the fluorosulfonate comprises a compound shown in formula II:
(FSO₃)_{y2}M2^{y2+} formula II
wherein M2^{y2+} comprises one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y2 = 1, 2, or 3.

2. The electrolyte according to claim 1, wherein the difluoro(oxalato)borate comprises a compound shown in formula I:
(F₂C₂O₄B)_{y1}M1^{y1+} formula I
wherein M1^{y1+} comprises one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y1 = 1, 2, or 3.

3. The electrolyte according to claim 1 or 2, wherein the difluorophosphate comprises a compound shown in formula III:
(PO₂F₂)_{y3}M3^{y3+} formula III
wherein M3^{y3+} comprises one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺, and y3 = 1, 2, or 3.

4. The electrolyte according to any one of claims 1 to 3, wherein a mass ratio of the first additive to the second additive is 0.001 to 1000.

5. The electrolyte according to any one of claims 1 to 4, wherein the mass ratio of the first additive to the second additive is 0.01 to 200.

6. The electrolyte according to any one of claims 1 to 5, wherein in percentage by mass of the electrolyte, a mass content of the difluoro(oxalato)borate is 0.001% to 5%.

7. The electrolyte according to any one of claims 1 to 6, wherein in percentage by mass of the electrolyte, the mass content of the difluoro(oxalato)borate is 0.1% to 2%.

8. The electrolyte according to any one of claims 1 to 7, wherein in percentage by mass of the electrolyte, a mass content of the fluorosulfonate is 0.001% to 5%.

9. The electrolyte according to any one of claims 1 to 8, wherein in percentage by mass of the electrolyte, the mass content of the fluorosulfonate is 0.1% to 2%.

10. The electrolyte according to any one of claims 1 to 9, wherein in percentage by mass of the electrolyte, a mass content of the difluorophosphate is 0.001% to 5%.

11. The electrolyte according to any one of claims 1 to 10, wherein in percentage by mass of the electrolyte, the mass content of the difluorophosphate is 0.1% to 2%.

12. The electrolyte according to any one of claims 1 to 11, wherein the electrolyte further comprises a third additive, and the third additive comprises one or more of fluoroethylene carbonate, difluoroethylene carbonate, vinylene carbonate, vinyl ethylene carbonate, maleic anhydride, succinic anhydride, and triallyl phosphate.

13. The electrolyte according to claim 12, wherein in percentage by mass of the electrolyte, a mass content of the third additive is 0.01% to 10%.

14. The electrolyte according to claim 12 or 13, wherein in percentage by mass of the electrolyte, the mass content of the third additive is 0.1% to 5%.

15. The electrolyte according to any one of claims 1 to 14, wherein the electrolyte comprises a sodium salt, and the sodium salt comprises one or more of NaPF₆, NaFSI, NaBF₄, NaN(SO₂F)₂, NaClO₄, NaAsF₆, NaB(C₂O₄)₂, and NaBF₂(C₂O₄).

16. The electrolyte according to any one of claims 1 to 15, wherein the electrolyte comprises a solvent, and the solvent comprises one or more of a linear carbonate solvent, a linear carboxylate solvent, a cyclic carbonate solvent, and an ether solvent.

17. The electrolyte according to claim 16, wherein the linear carbonate solvent comprises one or more of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the linear carboxylate solvent comprises one or more of methyl formate, ethyl formate, methyl propionate, ethyl propionate, propyl propionate, ethyl butyrate, methyl acetate, ethyl acetate, and propyl acetate;
the cyclic carbonate comprises one or more of ethylene carbonate, propylene carbonate, butylene carbonate, vinylene carbonate, fluoroethylene carbonate, ethylene sulfite, propylene sulfite, vinyl ethylene carbonate, 4-ethynyl-1,3-dioxolan-2-one, cis-4,5-difluoro-1,3-dioxolan-2-one, and trans-4,5-difluoro-1,3-dioxolan-2-one; and
the ether solvent comprises one or more of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

18. A sodium secondary battery, comprising a positive electrode plate, a negative electrode plate, and the electrolyte according to any one of claims 1 to 17.

19. The sodium secondary battery according to claim 18, wherein the positive electrode plate comprises a positive electrode current collector and a positive electrode material layer on at least one side of the positive electrode current collector, the positive electrode material layer comprises a positive electrode active material, and the positive electrode active material comprises at least one of a layered transition metal oxide, a Prussian blue compound, and a polyanionic compound.

20. The sodium secondary battery according to claim 18 or 19, wherein a general formula of the layered transition metal oxide is NaₓMnₐFe_{b}Ni_{c}M_{d}NₑO_{2-δ}Q_{f}, wherein M comprises at least one of Ti, Li, V, Cr, Cu, Zn, Zr, Nb, Mo, Sn, Hf, Ta, Mg, and Al, N comprises at least one of Si, P, B, S, and Se, Q comprises at least one of F, Cl, and N, 0.66 ≤ x ≤ 1, 0 < a ≤ 0.7, 0 < b ≤ 0.7, 0 < c ≤ 0.23, 0 ≤ d < 0.3, 0 ≤ e ≤ 0.3, 0 ≤ f ≤ 0.3, 0 ≤ δ ≤ 0.3, a + b + c + d + e = 1, 0 < e + f ≤ 0.3, 0 < (e + f)/a ≤ 0.3, 0.2 ≤ d + e + f ≤ 0.3, and (b + c)/a ≤ 1.5.

21. The sodium secondary battery according to any one of claims 19 to 21, wherein the positive electrode active material comprises the layered transition metal oxide containing a Cu element; and
a ratio of the mass content of the difluoro(oxalato)borate in the electrolyte to a mass content of the Cu element in the positive electrode active material is greater than or equal to 0.002.

22. The sodium secondary battery according to claim 21, wherein the mass content of the Cu element in the positive electrode active material is less than or equal to 23%.

23. The sodium secondary battery according to claim 21 or 22, wherein the mass content of the Cu element in the positive electrode active material is 6.5% to 18%.

24. The sodium secondary battery according to any one of claims 18 to 23, wherein the negative electrode plate comprises a negative electrode current collector and a negative electrode material layer on at least one side of the negative electrode current collector, and the negative electrode material layer comprises a Ca element; and
a ratio of the mass content of the difluoro(oxalato)borate in the electrolyte to a mass content of the Ca element in the negative electrode material layer is greater than or equal to 1.

25. The sodium secondary battery according to claim 24, wherein the mass content of the Ca element in the negative electrode material layer is 0.1 ppm to 3000 ppm.

26. The sodium secondary battery according to claim 24 or 25, wherein the mass content of the Ca element in the negative electrode material layer is 2 ppm to 1000 ppm.

27. The sodium secondary battery according to any one of claims 24 to 26, wherein the mass content of the Ca element in the negative electrode material layer is 100 ppm to 1000 ppm.

28. The sodium secondary battery according to any one of claims 24 to 27, wherein the negative electrode material layer further comprises a negative electrode active material, and the negative electrode active material comprises one or more of hard carbon, metal sodium, a tin alloy, and a metal oxide.

29. The sodium secondary battery according to any one of claims 18 to 28, wherein at a charging rate of 0.05 C, a capacity of the negative electrode plate within a charging range of 0.5 V to 1 V is 9 mAh/g to 140 mAh/g.

30. The sodium secondary battery according to any one of claims 18 to 29, wherein at the charging rate of 0.05 C, the capacity of the negative electrode plate within the charging range of 0.5 V to 1 V is 18 mAh/g to 70 mAh/g.

31. A power-consuming apparatus, comprising the sodium secondary battery according to any one of claims 18 to 30.
